(19) Europäisches Patentamt
European Patent Office
Office européen des brevets

(11) **EP 4 160 807 A1**

(12) **EUROPEAN PATENT APPLICATION**
published in accordance with Art. 153(4) EPC

(43) Date of publication:
**05.04.2023 Bulletin 2023/14**

(21) Application number: **21812488.1**

(22) Date of filing: **27.05.2021**

(51) International Patent Classification (IPC):
*H01M 50/451* (2021.01)    *H01M 50/42* (2021.01)
*H01M 50/426* (2021.01)    *H01M 50/434* (2021.01)
*H01M 50/443* (2021.01)    *H01M 50/446* (2021.01)
*H01M 50/457* (2021.01)    *H01M 50/46* (2021.01)
*H01M 50/491* (2021.01)

(52) Cooperative Patent Classification (CPC):
**H01M 50/42; H01M 50/426; H01M 50/434;**
**H01M 50/443; H01M 50/446; H01M 50/451;**
**H01M 50/457; H01M 50/46; H01M 50/491;**
Y02E 60/10

(86) International application number:
**PCT/JP2021/020205**

(87) International publication number:
**WO 2021/241689 (02.12.2021 Gazette 2021/48)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.05.2020   JP 2020093546**
**28.05.2020   JP 2020093547**
**28.05.2020   JP 2020093548**
**19.06.2020   JP 2020106408**

(71) Applicant: **Teijin Limited**
**Osaka 530-0005 (JP)**

(72) Inventors:
• **KURATANI, Rika**
**Osaka-shi, Osaka 530-0005 (JP)**
• **NISHIKAWA, Satoshi**
**Osaka-shi, Osaka 530-0005 (JP)**

(74) Representative: **Carpmaels & Ransford LLP**
**One Southampton Row**
**London WC1B 5HA (GB)**

(54) **SEPARATOR FOR NON-AQUEOUS SECONDARY BATTERY, AND NON-AQUEOUS SECONDARY BATTERY**

(57)    A separator for a non-aqueous secondary battery contains: a porous substrate and a heat-resistant porous layer that is provided on one side or on both sides of the porous substrate, and that contains a resin and inorganic particles, in which
(1) the resin contains a copolymer having a vinylidene fluoride unit and a hexafluoropropylene unit, a weight average molecular weight of the copolymer being from 100,000 to less than 600,000, or the resin contains a polyvinylidene fluoride type resin and an acrylic type resin, in which a mass ratio between the polyvinylidene fluoride type resin and the acrylic type resin (polyvinylidene fluoride type resin : acrylic type resin) contained in the heat-resistant porous layer is from 90:10 to 50:50; a content of the inorganic particles in the heat-resistant porous layer is from 50% by mass to 90% by mass; and the inorganic particles contain first inorganic particles having an average primary particle size of from 0.01 $\mu$m to 0.3 $\mu$m and second inorganic particles having a larger average primary particle size than the average primary particle size of the first inorganic particles,
(2) a content of the inorganic particles in the heat-resistant porous layer is from 50% by mass to 90% by mass; and the inorganic particles contain first inorganic particles that are metal sulfate particles and second inorganic particles that are inorganic particles other than metal sulfate particles, or
(3) a content of the inorganic particles in the heat-resistant porous layer is from 50% by mass to 90% by mass; and the inorganic particles contain first inorganic particles that are metal hydroxide particles and second inorganic particles that are inorganic particles other than metal hydroxide particles.

EP 4 160 807 A1

**Description**

Technical Field

The disclosure relates to a separator for a non-aqueous secondary battery and a non-aqueous secondary battery.

Background Art

The separator, which is one of the members constituting the non-aqueous secondary battery, is required to have heat resistance that does not easily break the film or shrink even when the inside of the battery gets hot in order to ensure the safety of the battery. As a separator having increased heat resistance, a separator including a porous layer containing inorganic particles on a porous substrate is known.

In addition, the separator is required to have adhesiveness that does not easily peel off from the electrode even when the separator receives an impact from the outside or the electrode expands and contracts due to charging and discharging. As a separator having increased adhesiveness to an electrode, a separator is known in which a porous layer containing a resin exhibiting adhesiveness to an electrode is provided on a porous substrate.

For example, Patent Document 1 (International Patent Application Laid-Open (WO-A) No. 2017/002947) discloses a separator including a porous layer containing a polyvinylidene fluoride type resin and inorganic particles on a porous substrate.

In manufacturing a battery, a laminated body in which a separator is disposed between a positive electrode and a negative electrode may be subjected to dry heat pressing (hot pressing treatment performed without impregnating the separator with an electrolytic solution). When the separator and the electrode are favorably bonded by the dry heat press, the separator and the electrode are less likely to be misaligned in the manufacturing process of the battery, and the production yield of the battery can be improved.

As a separator including a porous layer having heat resistance and good adhesiveness to an electrode by dry heat pressing, for example, International Patent Application Laid-Open (WO-A) Nos. 2017/002947 and 2016/098684 disclose such a separator.

The separator, which is one of the members constituting the non-aqueous secondary battery, is required to have heat resistance that does not easily break the film or shrink even when the inside of the battery gets hot in order to ensure the safety of the battery. As a separator having increased heat resistance, a separator including a porous layer containing inorganic particles on a porous substrate is known. For example, International Patent Application Laid-Open (WO-A) Nos. 2016/098684 and 2019/146155 disclose a separator including a porous layer containing a resin and inorganic particles on a porous substrate. In addition, for example, International Patent Application Laid-Open (WO-A) No. 2008/156033 discloses a separator including a porous layer containing a resin and metal hydroxide particles on a porous substrate. For example, Japanese patent application (Laid-Open) No. 2016-033913 discloses a separator including a porous layer containing a resin and metal hydroxide particles on a porous substrate.

SUMMARY OF INVENTION

Technical Problem

In manufacturing a battery, a laminated body in which a separator is disposed between a positive electrode and a negative electrode may be subjected to dry heat pressing (hot pressing treatment performed without impregnating the separator with an electrolytic solution). When the separator and the electrode are favorably bonded by the dry heat press, the separator and the electrode are less likely to be misaligned in the manufacturing process of the battery, and the production yield of the battery can be improved. There is a demand for a separator that is excellent in heat resistance and is favorably bonded to an electrode by the dry heat press.

A first embodiment of the disclosure has been made under the above circumstances.

An object of an embodiment A according to the first embodiment is to provide a separator for a non-aqueous secondary battery having excellent heat resistance and excellent adhesiveness to an electrode by dry heat press, and the embodiment aims to achieve the object.

In order to further improve the safety and production efficiency of the battery, a separator that is excellent in heat resistance under high temperature (for example, 150°C) and that adheres well to the electrode by dry heat press is desired.

Further, a first embodiment of the disclosure has been made under the above circumstances.

An object of an embodiment B according to the first embodiment is to provide a separator for a non-aqueous secondary battery having excellent heat resistance under high temperature and excellent adhesiveness to an electrode by dry heat press, and the embodiment aims to achieve the object.

As a measure for improving the heat resistance of the porous layer provided on the porous substrate, there is a measure for increasing the content of inorganic particles contained in the porous layer. However, when the content of the inorganic particles is large, the viscosity of the coating liquid for forming the porous layer may increase or the viscosity of the coating liquid may increase with time. When the viscosity of the coating liquid is high, it becomes difficult to form the porous layer, and the productivity of the separator decreases.

A second embodiment of the disclosure has been made under the above circumstances.

An object of the second embodiment is to provide a separator for a non-aqueous secondary battery having excellent heat resistance and high productivity, and the second embodiment aims to achieve the object.

It is known that a metal hydroxide undergoes a dehydration reaction under high temperature to become a metal oxide, and it is known that water generated in this dehydration reaction exhibits a flame retardant effect. Therefore, in a separator including a porous layer containing metal hydroxide particles, the metal hydroxide particles exhibit the flame retardant effect when the temperature in the battery abnormally rises, as a result of which it is possible to suppress smoking or ignition of the battery. However, when the water generated from the metal hydroxide particles is excessive, the water reacts with an electrolytic solution or an electrode to cause a further temperature rise, which may lead to smoking or ignition of the battery.

A third embodiment of the disclosure has been made under the above circumstances.

An object of the third embodiment is to provide a separator for a non-aqueous secondary battery which enhances safety of a battery, and the third embodiment aims to achieve the object.

Solution to Problem

The specific embodiment A according to the first embodiment of the disclosure includes the following aspects.

[1] A separator for a non-aqueous secondary battery, the separator comprising:

> a porous substrate; and
> a heat-resistant porous layer that is provided on one side or on both sides of the porous substrate, and that contains a resin and inorganic particles,
> wherein the resin contains a copolymer having a vinylidene fluoride unit and a hexafluoropropylene unit, a weight average molecular weight of the copolymer being from 100,000 to less than 600,000,
> wherein a mass ratio of the inorganic particles in the heat-resistant porous layer is from 50% by mass to 90% by mass, and
> wherein the inorganic particles contain first inorganic particles having an average primary particle size of from 0.01 $\mu$m to 0.3 $\mu$m and second inorganic particles having a larger average primary particle size than the average primary particle size of the first inorganic particles.

[2] The separator for a non-aqueous secondary battery according to [1], wherein a mass ratio between the first inorganic particles and the second inorganic particles (first inorganic particles: second inorganic particles) is from 90:10 to 10:90.

[3] The separator for a non-aqueous secondary battery according to [1] or [2], wherein an average primary particle size of the second inorganic particles is from 0.4 $\mu$m to 2.0 $\mu$m.

[4] The separator for a non-aqueous secondary battery according to any one of [1] to [3], wherein a content of the hexafluoropropylene unit with respect to an entirety of monomer units of the copolymer is from 3.0% by mole to 30% by mole.

[5] The separator for a non-aqueous secondary battery according to any one of [1] to [4], wherein the inorganic particles contain metal sulfate particles and metal hydroxide particles.

[6] The separator for a non-aqueous secondary battery according to any one of [1] to [5], wherein a thickness of the heat-resistant porous layer is from 1 $\mu$m to 8 $\mu$m per one side of the porous substrate.

[7] The separator for a non-aqueous secondary battery according to any one of [1] to [6], wherein a porosity of the heat-resistant porous layer is from 25% to 60%.

[8] The separator for a non-aqueous secondary battery according to any one of [1] to [7], wherein a mass ratio between the first inorganic particles and the second inorganic particles (first inorganic particles: second inorganic particles) is from 80:20 to 40:60.

[9] The separator for a non-aqueous secondary battery according to any one of [1] to [8], wherein a content of the inorganic particles in the heat-resistant porous layer is from 60% by mass to 80% by mass.

[10] A non-aqueous secondary battery that obtains electromotive force by lithium doping and dedoping, the non-aqueous secondary battery containing:

a positive electrode;
a negative electrode; and
the separator for a non-aqueous secondary battery according to any one of [1] to [9], the separator being disposed between the positive electrode and the negative electrode.

The specific embodiment B according to the first embodiment of the disclosure includes the following aspects.

[1] A separator for a non-aqueous secondary battery, the separator comprising:

a porous substrate; and
a heat-resistant porous layer that is provided on one side or on both sides of the porous substrate, and that contains a resin and inorganic particles,
wherein the resin contains a polyvinylidene fluoride type resin and an acrylic type resin, in which a mass ratio between the polyvinylidene fluoride type resin and the acrylic type resin (polyvinylidene fluoride type resin : acrylic type resin) contained in the heat-resistant porous layer is from 90:10 to 50:50,
wherein a content of the inorganic particles in the heat-resistant porous layer is from 50% by mass to 90% by mass, and
wherein the inorganic particles contain first inorganic particles having an average primary particle size of from 0.01 $\mu$m to 0.3 $\mu$m and second inorganic particles having a larger average primary particle size than the average primary particle size of the first inorganic particles.

[2] The separator for a non-aqueous secondary battery according to [1], wherein a mass ratio between the first inorganic particles and the second inorganic particles (first inorganic particles: second inorganic particles) is from 95:5 to 10:90.

[3] The separator for a non-aqueous secondary battery according to [1] or [2], wherein an average primary particle size of the second inorganic particles is from 0.4 $\mu$m to 2.0 $\mu$m.

[4] The separator for a non-aqueous secondary battery according to any one of [1] to [3], wherein the inorganic particles contain metal sulfate particles and metal hydroxide particles.

[5] The separator for a non-aqueous secondary battery according to any one of [1] to [4], wherein a weight average molecular weight of the polyvinylidene fluoride type resin is from 600,000 to 2,000,000.

[6] The separator for a non-aqueous secondary battery according to any one of [1] to [5], wherein a thickness of the heat-resistant porous layer is from 1 $\mu$m to 8 $\mu$m per one side of the porous substrate.

[7] The separator for a non-aqueous secondary battery according to any one of [1] to [6], wherein a porosity of the heat-resistant porous layer is from 25% to 60%.

[8] The separator for a non-aqueous secondary battery according to any one of [1] to [7], wherein a content of the inorganic particles in the heat-resistant porous layer is from 60% by mass to 80% by mass.

[9] The separator for a non-aqueous secondary battery according to any one of [1] to [8], wherein a mass ratio between the first inorganic particles and the second inorganic particles (first inorganic particles: second inorganic particles) is from 90:10 to 50:50.

[10] The separator for a non-aqueous secondary battery according to any one of [1] to [9], wherein a mass ratio between the polyvinylidene fluoride type resin and the acrylic type resin (polyvinylidene fluoride type resin:acrylic type resin) contained in the heat-resistant porous layer is from 85:15 to 65:35.

[11] A non-aqueous secondary battery that obtains electromotive force by lithium doping and dedoping, the non-aqueous secondary battery containing:

a positive electrode;
a negative electrode; and
the separator for a non-aqueous secondary battery according to any one of [1] to [10], the separator being disposed between the positive electrode and the negative electrode.

The second embodiment of the disclosure includes the following aspects.

[1] A separator for a non-aqueous secondary battery, the separator comprising:

a porous substrate; and
a heat-resistant porous layer that is provided on one side or on both sides of the porous substrate, and that contains a resin and inorganic particles,
wherein a content of the inorganic particles in the heat-resistant porous layer is from 50% by mass to 90% by mass, and
wherein the inorganic particles contain first inorganic particles that are metal hydroxide particles and second inorganic particles that are inorganic particles other than metal hydroxide particles.

[2] The separator for a non-aqueous secondary battery according to [1], wherein a mass ratio between the first inorganic particles and the second inorganic particles (first inorganic particles: second inorganic particles) is from 90:10 to 10:90.

[3] The separator for a non-aqueous secondary battery according to [1] or [2], wherein an average primary particle size of the first inorganic particles is from 0.01 μm to 0.3 μm.

[4] The separator for a non-aqueous secondary battery according to any one of [1] to [3], wherein an average primary particle size of the second inorganic particles is from 0.4 μm to 2.0 μm.

[5] The separator for a non-aqueous secondary battery according to any one of [1] to [4], wherein the second inorganic particles are metal hydroxide particles.

[6] The separator for a non-aqueous secondary battery according to any one of [1] to [5], wherein a mass ratio between the first inorganic particles and the second inorganic particles (first inorganic particles: second inorganic particles) is from 80:20 to 40:60.

[7] The separator for a non-aqueous secondary battery according to any one of [1] to [6], wherein a content of the inorganic particles in the heat-resistant porous layer is from 60% by mass to 80% by mass.

[8] The separator for a non-aqueous secondary battery according to any one of [1] to [7], wherein the resin contains a polyvinylidene fluoride type resin that does not have a carboxylic group and an ester bond.

[9] A non-aqueous secondary battery that obtains electromotive force by lithium doping and dedoping, the non-aqueous secondary battery containing:

a positive electrode;
a negative electrode; and
the separator for a non-aqueous secondary battery according to any one of [1] to [8], the separator being disposed between the positive electrode and the negative electrode.

The third embodiment of the disclosure includes the following aspects.

[1] A separator for a non-aqueous secondary battery, the separator comprising:

a porous substrate; and
a heat-resistant porous layer that is provided on one side or on both sides of the porous substrate, and that contains a resin and inorganic particles,
wherein a content of the inorganic particles in the heat-resistant porous layer is from 50% by mass to 90% by mass, and
wherein the inorganic particles contain first inorganic particles that are metal hydroxide particles and second inorganic particles that are inorganic particles other than metal hydroxide particles.

[2] The separator for a non-aqueous secondary battery according to [1], wherein a mass ratio between the first inorganic particles and the second inorganic particles (first inorganic particles: second inorganic particles) is from 90:10 to 10:90.

[3] The separator for a non-aqueous secondary battery according to [1] or [2], wherein an average primary particle size of the first inorganic particles is from 0.4 μm to 2.0 μm.

[4] The separator for a non-aqueous secondary battery according to any one of [1] to [3], wherein an average primary particle size of the second inorganic particles is from 0.01 μm to 0.3 μm.

[5] The separator for a non-aqueous secondary battery according to any one of [1] to [4], wherein the second inorganic particles contain at least one selected from the group consisting of metal oxide particles, metal sulfate particles, metal carbonate particles, metal nitride particles, metal fluoride particles and clay mineral particles.

[6] The separator for a non-aqueous secondary battery according to any one of [1] to [5], wherein a mass ratio between the first inorganic particles and the second inorganic particles (first inorganic particles: second inorganic particles) is from 60:40 to 15:85.

[7] The separator for a non-aqueous secondary battery according to any one of [1] to [6], wherein a content of the inorganic particles in the heat-resistant porous layer is from 60% by mass to 80% by mass.

[8] A non-aqueous secondary battery that obtains electromotive force by lithium doping and dedoping, the non-aqueous secondary battery containing:

a positive electrode;

a negative electrode; and

the separator for a non-aqueous secondary battery according to any one of [1] to [7], the separator being disposed between the positive electrode and the negative electrode.

Advantageous Effects of Invention

An embodiment A according to the first embodiment of the disclosure provides the separator for a non-aqueous secondary battery having excellent heat resistance and excellent adhesiveness to an electrode by dry heat press is provided.

An embodiment B according to the first embodiment of the disclosure provides the separator for a non-aqueous secondary battery having excellent heat resistance under high temperature and excellent adhesiveness to an electrode by dry heat press is provided.

According to the second embodiment of the disclosure, the separator for a non-aqueous secondary battery having excellent heat resistance and high productivity is provided.

According to the third embodiment of the disclosure, there is provided the separator for a non-aqueous secondary battery that enhances safety of the battery.

DESCRIPTION OF EMBODIMENTS

Hereinafter, the embodiments will be described. Further, the description and the Examples thereof illustrate the embodiments, but do not limit the scope of the embodiments.

Unless otherwise specified, a matter described as "of the disclosure" or "in the disclosure" is a matter common to the first embodiment, the second embodiment, and the third embodiment.

In the disclosure, the numerical range denoted by using "to" represents the range inclusive of the number written before and after "to" as the minimum and maximum values.

Regarding stepwise numerical ranges designated in the disclosure, an upper or lower limit set forth in a certain numerical range may be replaced by an upper or lower limit of another stepwise numerical range described. Besides, an upper or lower limit set forth in a certain numerical range of the numerical ranges designated in the disclosure may be replaced by a value indicated in Examples.

In the disclosure, the term "process" includes not only an independent process, but also the process which is not clearly distinguished from other processes but achieves the desired purpose thereof.

In the disclosure, when the amount of each component in a composition is referred to and when a plurality of substances corresponding to each component are present in the composition, the total amount of the plurality of components present in the composition is meant unless otherwise specified.

A plurality of kinds of particles corresponding to each component in the disclosure may be contained. When there are a plurality of kinds of particles corresponding to each component in a composition, a particle diameter of each component means a value for a mixture of the plurality of kinds of particles present in the composition unless otherwise specified.

In the disclosure, "MD (machine direction)" refers to the longitudinal direction of a porous substrate and a separator manufactured in a long shape, and "TD (transverse direction)" refers to a direction orthogonal to "MD direction" in a surface direction of the porous substrate and a separator.

In the disclosure, in a case where a lamination relationship among layers constituting a separator is expressed as "upper" and "lower", a layer closer to a porous substrate is referred to as "lower", and a layer farther from the porous substrate is referred to as "upper".

In the disclosure, the notation "(meth)acryl" means either "acryl" or "methacryl".

In the disclosure, vinylidene fluoride is also referred to as "VDF", and hexafluoropropylene is also referred to as "HFP".

In the disclosure, "monomer unit" of a copolymer or a resin means a constituent unit of the copolymer or the resin, and means a constituent unit obtained by polymerizing a monomer.

In the disclosure, a heat-resistant resin refers to a resin having a melting point of 200°C or higher, or a resin having no melting point and having a decomposition temperature of 200°C or higher. That is, the heat-resistant resin in the disclosure is a resin that is not melted or decomposed in a temperature range of lower than 200°C.

In the disclosure, performing the hot pressing treatment by impregnating the separator with the electrolytic solution is referred to as "wet heat press", and performing the hot pressing treatment without impregnating the separator with the electrolytic solution is referred to as "dry heat press".

<Separator for Non-aqueous Secondary Battery of First Embodiment>

A separator for a non-aqueous secondary battery of first embodiment (also simply referred to as "separator of first embodiment") of the disclosure includes a porous substrate and a heat-resistant porous layer provided on one side or on both sides of the porous substrate.

The separator of the first embodiment includes the separator of the embodiment A and the separator of the embodiment B. Hereinafter, unless otherwise specified, a matter described as the "first embodiment" is a matter common to the embodiment A and the embodiment B.

In the separator of the embodiment A, a heat-resistant porous layer contains a resin and inorganic particles; the resin contains a copolymer having a vinylidene fluoride unit and a hexafluoropropylene unit, a weight average molecular weight of the copolymer being from 100,000 to less than 600,000; a content of the inorganic particles in the heat-resistant porous layer is from 50% by mass to 90% by mass; and the inorganic particles contain first inorganic particles having an average primary particle size of from 0.01 $\mu$m to 0.3 $\mu$m and second inorganic particles having a larger average primary particle size than the average primary particle size of the first inorganic particles.

In the embodiment A, a copolymer having a vinylidene fluoride unit (VDF unit) and a hexafluoropropylene unit (HFP unit) and having a weight average molecular weight of from 100,000 to less than 600,000 is referred to as a "low molecular weight VDF-HFP copolymer".

In the embodiment A, the low molecular weight VDF-HFP copolymer includes both a polymer having only a VDF unit and an HFP unit and a polymer having a VDF unit, an HFP unit, and other monomer units.

The low molecular weight VDF-HFP copolymer in the embodiment A has a weight average molecular weight of 100,000 or more from the viewpoint of suppressing thermal shrinkage of the heat-resistant porous layer, and the heat-resistant porous layer is easily softened when heat is applied, and as a result, the weight average molecular weight is less than 600,000 from the viewpoint of the excellent adhesiveness to an electrode by dry heat press.

In the separator of the embodiment B, a heat-resistant porous layer contains a resin and inorganic particles; the resin contains a polyvinylidene fluoride type resin and an acrylic type resin, and a mass ratio between the polyvinylidene fluoride type resin and the acrylic type resin (polyvinylidene fluoride type resin : acrylic type resin) contained in the heat-resistant porous layer is from 90:10 to 50:50; a content of the inorganic particles in the heat-resistant porous layer is from 50% by mass to 90% by mass; and the inorganic particles contain first inorganic particles having an average primary particle size of from 0.01 $\mu$m to 0.3 $\mu$m and second inorganic particles having an average primary particle size larger than the average primary particle size of the first inorganic particles.

In the separator of the embodiment B, the heat-resistant porous layer contains a polyvinylidene fluoride type resin and an acrylic type resin. The heat-resistant porous layer contains a polyvinylidene fluoride type resin that does not cause melting and decomposition at a temperature of about 150°C, and as a result, is excellent in heat resistance that it is difficult to shrink under high temperature (for example, 150°C). The heat-resistant porous layer contains a polyvinylidene fluoride type resin mixed with an acrylic type resin, thereby improving the adhesiveness to the electrode by the dry heat press.

From the viewpoint of achieving the balance, a mass ratio between the polyvinylidene fluoride type resin and the acrylic type resin (polyvinylidene fluoride type resin : acrylic type resin) contained in the heat-resistant porous layer is from 90:10 to 50:50.

In the separator of the first embodiment, the content of the inorganic particles in the heat-resistant porous layer is 50 % by mass or more from the viewpoint of the heat resistance of the separator, and is 90 % by mass or less from the viewpoint of the excellent adhesiveness to the electrode by the dry heat press, the viewpoint of the moldability of the heat-resistant porous layer, and the viewpoint that the heat-resistant porous layer is less likely to be peeled off from the porous substrate.

In the separator of the first embodiment, the heat-resistant porous layer contains first inorganic particles having an average primary particle size of from 0.01 $\mu$m to 0.3 $\mu$m and second inorganic particles having an average primary particle size larger than that of the first inorganic particle. The first inorganic particles having a small particle size increase a surface area (specific surface area) of the inorganic particles per unit volume, and as a result, the number of contact points between the inorganic particles and the resin increases, so the shrinkage of the heat-resistant porous layer when exposed to a high temperature is suppressed. In addition, the first inorganic particles having a small particle size are densely filled, as a result of which the shrinkage of the heat-resistant porous layer is suppressed when the heat-resistant porous layer is exposed to a high temperature. Meanwhile, moderate unevenness is formed on the surface of the heat-resistant porous layer by the second inorganic particles having the average primary particle size larger than that of the first inorganic particle, and as a result, the heat-resistant porous layer is excellent in adhesiveness to the electrode by the dry heat press.

By the synergistic action of each of the configurations, the separator of the first embodiment is excellent in heat resistance that it is difficult to shrink under high temperature (for example, 150°C) and is the excellent adhesiveness to the electrode by the dry heat press.

Hereinafter, details of the porous substrate and the heat-resistant porous layer included in the separator of the first embodiment will be described.

[Porous Substrate of First Embodiment]

The porous substrate in the first embodiment refers to a substrate having pores or voids therein. As the substrate, a microporous film; a porous sheet such as non-woven fabric and paper, composed of a fibrous material; a composite porous sheet in which on a microporous film or a porous sheet, one or more of another porous layer are laminated; and the like may be listed. In the first embodiment, a microporous film is preferable from the viewpoint of thinning and strength of a separator. The microporous film refers to a film having a large number of micropores therein, having a structure in which these micropores are connected to each other, and allowing gas or liquid to pass from one side to the other side.

As the material for the porous substrate of the first embodiment, materials having electrical insulation are preferably used and any of organic materials and inorganic materials may be used.

It is preferred that the porous substrate of the first embodiment contains a thermoplastic resin, from the viewpoint of imparting a shutdown function to the porous substrate. The shutdown function refers to a function of dissolving the constituent material to clog the pores of the porous substrate, thereby blocking ionic migration, and preventing thermal runaway of a battery, when the battery temperature is raised. As the thermoplastic resin, a thermoplastic resin having a melting point less than 200 °C is preferred. As the thermoplastic resin, for example, polyesters such as polyethylene terephthalate; polyolefins such as polyethylene and polypropylene; and the like may be mentioned, and among them, polyolefins are preferred.

As the porous substrate of the first embodiment, a microporous film containing polyolefin (referred to as "polyolefin microporous film" in the first embodiment) is preferred. As the polyolefin microporous film, for example, a polyolefin microporous film which is applied to the conventional separator for a battery may be mentioned, and among them, it is preferred to select those having sufficient mechanical properties and ion permeability.

It is preferred that the polyolefin microporous film contains polyethylene, from the viewpoint of exhibiting the shutdown function, and the content of polyethylene is preferably 95 % by mass or more with respect to the total mass of the polyolefin microporous film.

It is preferred that the microporous film contains polypropylene, from the viewpoint of imparting heat resistance to the extent that the film is not easily broken when exposed to a high temperature.

It is preferred that the polyolefin microporous film contains polyethylene and polypropylene, from the viewpoint of imparting shutdown function and heat resistance that the film is not easily broken when exposed to a high temperature. As the polyolefin microporous film including polyethylene and polypropylene, a microporous film in which polyethylene and polypropylene are present in a mixed state in a layer may be mentioned. It is preferred that the microporous film contains 95% by mass or more of polyethylene and 5% by mass or less of polypropylene, from the viewpoint of compatibility of the shutdown function and heat resistance. In addition, from the viewpoint of compatibility of the shutdown function and heat resistance, a polyolefin microporous film having a lamination structure with two or more layers, in which at least one layer contains polyethylene and at least one layer contains polypropylene, is also preferred.

As the polyolefin contained in the polyolefin microporous film, a polyolefin having a weight average molecular weight (Mw) of from 100,000 to 5,000,000 is preferred. When the polyolefin has a Mw of 100,000 or more, sufficient mechanical properties may be provided to the microporous film. Meanwhile, when the polyolefin has a Mw of 5,000,000 or less, the shutdown characteristic of the microporous film is favorable, and film molding of the microporous film is easy.

Examples of the method for manufacturing the polyolefin microporous film include, a method containing extruding a molten polyolefin resin from a T-die to form a sheet, crystallizing and elongating the sheet, and further subjecting the sheet to heat treatment, thereby obtaining a microporous film; and a method containing extruding a polyolefin resin melted with a plasticizer such as liquid paraffin from a T-die, cooling it to form a sheet, elongating the sheet, extracting the plasticizer, and performing heat treatment, thereby obtaining a microporous film.

As the porous sheet composed of a fibrous material, non-woven fabric composed of fibrous materials such as polyesters such as polyethylene terephthalate; polyolefins such as polyethylene and polypropylene; heat-resistant resins such as wholly aromatic polyamide, polyamide-imide, polyimide, polyethersulfone, polysulfone, polyetherketone and polyetherimide; cellulose; and the like, or paper may be mentioned.

Examples of the composite porous sheet include a sheet in which a functional layer is stacked on a porous sheet made of a microporous film or a fibrous material. Such a composite porous sheet is preferable from the viewpoint that a function can be further added thereto with a functional layer. Examples of the functional layer include a porous layer made of a heat-resistant resin and a porous layer made of a heat-resistant resin and an inorganic filler from the viewpoint of imparting heat resistance. Examples of the heat-resistant resin include one or more heat-resistant resins selected from the group consisting of a wholly aromatic polyamide, a polyamide imide, a polyimide, a polyethersulfone, a polysulfone, a polyetherketone, and a polyetherimide. Examples of the inorganic filler include a metal oxide such as alumina, and a metal hydroxide such as magnesium hydroxide. Examples of a method of forming a composite include a method of applying a functional layer to a microporous film or a porous sheet, a method of bonding a microporous film or a porous sheet and a functional layer with an adhesive, and a method of thermally press-bonding a microporous film or a porous sheet with a functional layer.

The surface of the porous substrate of the first embodiment may be subjected to various surface treatments within the range of not impairing the nature of the porous substrate, for the purpose of improving wettability with the coating liquid for forming the heat-resistant porous layer. As the surface treatment, corona treatment, plasma treatment, flame treatment, UV irradiation treatment, and the like may be mentioned.

[Characteristics of Porous Substrate of First Embodiment]

The thickness of the porous substrate of the first embodiment is preferably 25 $\mu$m or less, more preferably 20 $\mu$m or less, and still more preferably 15$\mu$m or less, from the viewpoint of enhancing energy density of the battery, and is preferably 3 $\mu$m or more, more preferably 5 $\mu$m or more, from the viewpoint of production yield of the separator and production yield of the battery.

The Gurley value (JIS P8117:2009) of the porous substrate of the first embodiment is preferably from 50 sec/100 mL to 400 sec/100 mL, and more preferably from 80 sec/100 mL to 300 sec/100 mL, from the viewpoint of obtaining favorable ion permeability or suppression of battery short circuit.

The porosity of the porous substrate of the first embodiment is preferably from 20% to 60% from the viewpoint of obtaining appropriate membrane resistance and shutdown function. The porosity $\varepsilon$ (%) of the porous substrate is determined by the following formula.

$$\varepsilon = \{1 - Ws/(ds \cdot t)\} \times 100$$

Here, Ws represents basis weight of porous substrate (g/m$^2$), ds represents true density of porous substrate (g/cm$^3$), and t represents thickness of porous substrate ($\mu$m). Basis weight refers to a mass per unit area.

A puncture strength of the porous substrate of the first embodiment is preferably 160 gf (1.6N) or more, and more preferably 200 gf (2.0N) or more, from the viewpoint of the production yield of the separator and the production yield of the battery. The puncture strength of the porous substrate refers to a maximum puncture strength (gf) measured by performing a puncture test under the conditions of a needle tip radius of curvature of 0.5 mm and a puncture speed of 2 mm/sec using a KES-G5 handy compression tester manufactured by Kato Tech Co., Ltd.

An average pore size of the porous substrate of the first embodiment is preferably from 15 nm to 100 nm. When the average pore size of the porous substrate is 15 nm or more, ions are likely to move, and favorable battery performance is likely to be obtained. From this viewpoint, the average pore size of the porous substrate is more preferably 25 nm or more, and still more preferably 30 nm or more. When the average pore size of the porous substrate is 100 nm or less, the peel strength between the porous substrate and the heat-resistant porous layer can be improved, and a favorable shutdown function can also be exhibited. From this viewpoint, the average pore size of the porous substrate is more preferably 90 nm or less, and still more preferably 80 nm or less. The average pore size of the porous substrate is a value measured using a palm porometer, and is measured using a palm porometer (CFP-1500-A manufactured by PMI) in accordance with ASTM E1294-89.

[Heat-Resistant Porous Layer of First Embodiment]

In the separator of the first embodiment, the heat-resistant porous layer is provided as an outermost layer of the separator on one side or both sides of the porous substrate, and is a layer that adheres to an electrode when the separator and the electrode are stacked and pressed or hot-pressed. The heat-resistant porous layer has a large number of micropores therein and has a structure in which the micropores are connected with each other, and is a layer through which a gas or a liquid can pass from one side to the other side.

In the separator of the first embodiment, the heat-resistant porous layer may be provided only on one side of the porous substrate, or may be provided on both sides of the porous substrate. When the heat-resistant porous layers are provided on both sides of the porous substrate, the adhesiveness of the separator to both electrodes of a battery is favorable. In addition, the separator is less likely to be curled, and has excellent handleability during production of a battery. When the heat-resistant porous layer is provided only on one side of the porous substrate, the ion permeability of the separator is further improved. In addition, the thickness of the entire separator can be suppressed, and a battery having a higher energy density can be produced.

(Heat-Resistant Porous Layer of Embodiment A)

In the separator of the embodiment A, a heat-resistant porous layer contains a low molecular weight VDF-HFP copolymer and inorganic particles, and the inorganic particles contain first inorganic particles having an average primary particle size of from 0.01 μm to 0.3 μm and second inorganic particles having an average primary particle size larger than that of the first inorganic particles. In the separator of the embodiment A, the heat-resistant porous layer may contain other resins other than the low molecular weight VDF-HFP copolymer, an organic filler, and the like.

- Low Molecular Weight VDF-HFP Copolymer of First embodiment -

The low molecular weight VDF-HFP copolymer of the first embodiment includes both a copolymer obtained by polymerizing only VDF and HFP and a copolymer obtained by polymerizing VDF, HFP, and other monomers.
Examples of other monomers other than the VDF and HFP that can constitute the low molecular weight VDF-HFP copolymer of the first embodiment include halogen-containing monomers such as tetrafluoroethylene, trifluoroethylene, chlorotrifluoroethylene, vinyl fluoride, and trichloroethylene; and monomers (for example, (meth) acrylic acid, (meth) acrylic acid ester, maleic acid, maleic anhydride, maleic acid ester, and fluorine-substituted products thereof) having a carboxy group. The monomer units derived from one kind or two or more kinds of these monomers may be contained in the low molecular weight VDF-HFP copolymer. However, when the low molecular weight VDF-HFP copolymer has other monomer units other than the VDF unit and the HFP unit, the content of the other monomer units is preferably smaller than the content of the HFP unit, and specifically, is preferably less than 3.0% by mole of the total monomer units.
The low molecular weight VDF-HFP copolymer of the first embodiment can control the crystallinity, heat resistance, solubility resistance to an electrolytic solution, and the like of the copolymer to be within an appropriate range by increasing or decreasing the content of the HFP unit.
The content of the HFP unit contained in the low molecular weight VDF-HFP copolymer of the first embodiment is preferably 3.0% by mole or more, more preferably 4.5% by mole or more, and still more preferably 7.0% by mole or more with respect to an entirety of monomer units from the viewpoint of easily softening the heat-resistant porous layer when heat is applied and thus obtaining the excellent adhesiveness to the electrode by the dry heat press.
The content of the HFP unit contained in the low molecular weight VDF-HFP copolymer of the first embodiment is preferably 30% by mole or less, more preferably 20% by mole or less, and still more preferably 15% by mole or less with respect to an entirety of monomer units from the viewpoint of the solubility resistance to the electrolytic solution.
From the viewpoint of suppressing the thermal shrinkage of the heat-resistant porous layer, the low molecular weight VDF-HFP copolymer of the first embodiment has a weight average molecular weight (Mw) of 100,000 or more, more preferably 200,000 or more, and still more preferably 300,000 or more.
The low molecular weight VDF-HFP copolymer of the first embodiment has a weight average molecular weight (Mw) of less than 600,000, more preferably 550,000 or less, and still more preferably 500,000 or less, from the viewpoint of easily softening the heat-resistant porous layer when heat is applied and thus obtaining the excellent adhesiveness to the electrode by the dry heat press.
In the embodiment A, the content of the low molecular weight VDF-HFP copolymer contained in the heat-resistant porous layer is preferably from 85% by mass to 100% by mass, more preferably from 90% by mass to 100% by mass, and still more preferably from 95% by mass to 100% by mass with respect to the total amount of all the resins contained in the heat-resistant porous layer.

- Other Resins in Embodiment A -

In the embodiment A, the heat-resistant porous layer may contain resins other than the low molecular weight VDF-HFP copolymer. Examples of the other resins include a homopolymer of vinylidene fluoride (that is, polyvinylidene fluoride), a copolymer of vinylidene fluoride and tetrafluoroethylene, trifluoroethylene, chlorotrifluoroethylene, vinyl fluoride, trichloroethylene, or the like, an acrylic type resin, a fluorinated rubber, a styrene-butadiene copolymer, a homopolymer or a copolymer of vinyl nitrile compounds (acrylonitrile, methacrylonitrile, and the like), carboxymethyl cellulose, hydroxyalkyl cellulose, polyvinyl alcohol, polyvinyl butyral, polyvinyl pyrrolidone, polyether (polyethylene oxide, polypropylene oxide, and the like), polyamide, wholly aromatic polyamide, polyimide, polyamideimide, polysulfone, polyketone, polyether ketone, polyether sulfone, polyether imide, and mixtures thereof.
In the embodiment A, the content of the other resins other than the low molecular weight VDF-HFP copolymer contained in the heat-resistant porous layer is preferably from 0% by mass to 15% by mass, more preferably from 0% by mass to 10% by mass, and still more preferably from 0% by mass to 5% by mass with respect to the total amount of all the resins contained in the heat-resistant porous layer.

(Heat-Resistant Porous Layer of Embodiment B)

In the separator of the embodiment B, the heat-resistant porous layer contains a resin and inorganic particles, the resin contains a polyvinylidene fluoride type resin and an acrylic type resin, and the inorganic particles contain first inorganic particles having an average primary particle size of from 0.01 $\mu$m to 0.3 $\mu$m and second inorganic particles having an average primary particle size larger than that of the first inorganic particle. In the separator of the embodiment B, the heat-resistant porous layer may contain other resins other than the polyvinylidene fluoride type resin and the acrylic type resin, an organic filler, and the like.

- Polyvinylidene fluoride type resin of Embodiment B -

In the embodiment B, examples of the polyvinylidene fluoride type resin include a homopolymer (that is, polyvinylidene fluoride) of vinylidene fluoride; a copolymer of vinylidene fluoride and halogen-containing monomers such as hexafluoropropylene, tetrafluoroethylene, trifluoroethylene, chlorotrifluoroethylene, vinyl fluoride, and trichloroethylene; and mixtures thereof. The polyvinylidene fluoride type resin may be used singly, or may be used in combination of two or more thereof.

In the embodiment B, the polyvinylidene fluoride type resin is preferably a copolymer of vinylidene fluoride (VDF) and hexafluoropropylene (HFP) (VDF-HFP copolymer) from the viewpoint of the adhesiveness to the electrode. In the embodiment B, the VDF-HFP copolymer includes both a copolymer obtained by polymerizing only the VDF and HFP and a copolymer obtained by polymerizing the VDF, the HFP, and other monomers. The VDF-HFP copolymer can control the crystallinity, the heat resistance, the solubility resistance to the electrolytic solution, and the like of the copolymer to be within an appropriate range by increasing or decreasing the content of the HFP unit.

In the embodiment B, the polyvinylidene fluoride type resin preferably has a weight average molecular weight (Mw) of from 600,000 to 2,000,000. When the Mw of the polyvinylidene fluoride type resin is 600,000 or more, the melting and decomposition of the polyvinylidene fluoride type resin hardly occur under high temperature, and the heat resistance of the heat-resistant porous layer is further improved. From this viewpoint, the Mw of the polyvinylidene fluoride type resin is preferably 600,000 or more, more preferably 700,000 or more, and still more preferably 800,000 or more. When the Mw of the polyvinylidene fluoride type resin is 2,000,000 or less, the flexibility of the polyvinylidene fluoride type resin is likely to increase during the dry heat press, and the adhesiveness of the heat-resistant porous layer to the electrode is further improved. From this viewpoint, the Mw of the polyvinylidene fluoride type resin is preferably 2,000,000 or less, more preferably 1,800,000 or less, and still more preferably 1,500,000 or less.

- Acrylic type resin of Embodiment B -

In the embodiment B, the acrylic type resin means a resin having an acrylic monomer unit, and includes both a polymer obtained by polymerizing only an acrylic monomer and a copolymer obtained by polymerizing an acrylic monomer and other monomers.

The acrylic monomer is preferably at least one acrylic monomer selected from the group consisting of (meth) acrylic acid, (meth) acrylic acid salt, and (meth) acrylic acid ester.

Examples of the (meth) acrylate include sodium (meth) acrylate, potassium (meth) acrylate, magnesium (meth) acrylate, and zinc (meth) acrylate.

Examples of the (meth) acrylic acid ester include methyl (meth) acrylate, ethyl (meth) acrylate, isopropyl (meth) acrylate, n-butyl (meth) acrylate, isobutyl (meth) methacrylate, n-hexyl (meth) acrylate, (meth) acrylic 2-ethylhexyl acid, lauryl (meth) acrylate, stearyl (meth) acrylate, cyclohexyl (meth) acrylate, dicyclopentanyl (meth) acrylate, isobornyl (meth) acrylate, 2-hydroxyethyl (meth) acrylate, hydroxypropyl (meth) acrylate, 4-hydroxybutyl (meth) acrylate, 2-(diethylamino) ethyl (meth) acrylate, and methoxypolyethylene glycol (meth) acrylate.

As the acrylic monomer, methyl (meth) acrylate, ethyl (meth) acrylate, isopropyl (meth) acrylate, n-butyl (meth) acrylate, lauryl (meth) acrylate, stearyl (meth) acrylate, 2-ethylhexyl (meth) acrylate, and 2-hydroxyethyl (meth) acrylate are preferable.

As the acrylic type resin of the embodiment B, from the viewpoint of high compatibility with polyvinylidene fluoride type resin, an acrylic type resin containing a monomer unit derived from a lower alkyl ester of (meth) acrylic acid (alkyl group having 1 to 6 carbon atoms and preferably alkyl group having 1 to 4 carbon atoms) is preferable, an acrylic type resin containing at least one of a methyl acrylate unit and a methyl methacrylate unit is more preferable, and an acrylic type resin containing methyl methacrylate units are still more preferable. An acrylic type resin containing at least one of a methyl acrylate unit and a methyl methacrylate unit is preferable because it has an effect of lowering the glass transition temperature of the heat-resistant porous layer.

The content of the acrylic monomer unit contained in the acrylic type resin of the embodiment B is preferably from 50% by mass to 100% by mass, more preferably from 60% by mass to 100% by mass, and still more preferably from 70% by mass to 100% by mass with respect to the total monomer units.

The total content of the methyl acrylate unit and the methyl methacrylate unit contained in the acrylic type resin of the embodiment B is preferably from 50% by mass to 100% by mass, more preferably from 60% by mass to 100% by mass, and still more preferably from 70% by mass to 100% by mass with respect to the total monomer units.

The content of the methyl methacrylate unit contained in the acrylic type resin of the embodiment B is preferably from 50% by mass to 100% by mass, more preferably from 60% by mass to 100% by mass, and still more preferably from 70% by mass to 100% by mass with respect to the total monomer units.

One aspect example of the acrylic type resin of the embodiment B includes an acrylic type resin having a styrene monomer unit, that is, a styrene acrylic type resin. Since the styrene acrylic type resin has a styrene monomer unit, it is difficult for the styrene acrylic type resin to dissolve or swell in the electrolytic solution, it is presumed that, in the heat-resistant porous layer containing the polyvinylidene fluoride type resin and the styrene acrylic type resin as binder resins, adhesiveness between the heat-resistant porous layer and the electrode and the porous substrate is maintained inside the battery (that is, in a state of being impregnated with the electrolytic solution) as compared with the heat-resistant porous layer containing only the polyvinylidene fluoride type resin as a binder resin.

Examples of the styrene monomer include styrene, meta-chlorostyrene, para-chlorostyrene, parafluorostyrene, para-methoxystyrene, meta-tert-butoxystyrene, para-tert-butoxystyrene, paravinylbenzoic acid, and para-methyl-$\alpha$-methylstyrene. As the styrene monomer, styrene, para-methoxystyrene, and para-methyl-$\alpha$-methylstyrene are preferable, and styrene is particularly preferable from the viewpoint of suppressing the dissolution of the acrylic type resin in the electrolytic solution.

When the acrylic type resin of the embodiment B contains the styrene monomer unit, the content of the styrene monomer unit contained in the acrylic type resin is preferably from 25% by mass to 75% by mass, more preferably from 30% by mass to 70% by mass, and still more preferably from 35% by mass to 65% by mass with respect to the total monomer units.

When the acrylic type resin of the embodiment B contains the styrene unit, the content of the styrene unit contained in the acrylic type resin is preferably from 25% by mass to 75% by mass, more preferably from 30% by mass to 70% by mass, and still more preferably from 35% by mass to 65% by mass with respect to the total monomer units.

Another aspect example of the acrylic type resin of the embodiment B includes a copolymer containing an acrylic monomer unit and a monomer unit derived from an unsaturated carboxylic anhydride.

Another aspect example of the acrylic type resin includes a copolymer containing an acrylic monomer unit, a styrene monomer unit, and a monomer unit derived from an unsaturated carboxylic anhydride.

Examples of the unsaturated carboxylic anhydride as a monomer constituting the acrylic type resin of the embodiment B include maleic anhydride, itaconic anhydride, citraconic anhydride, 4-methacryloxyethyl trimellitic anhydride, and trimellitic anhydride. It is presumed that when the acrylic type resin contains the unsaturated carboxylic anhydride unit, the strength of polarization of the unsaturated carboxylic anhydride unit generates intermolecular interaction with the constituent components of the electrode, or the residual carboxy group derived from the unsaturated carboxylic anhydride reacts with the amino terminal of the resin component in the electrode, thereby improving the adhesiveness between the heat-resistant porous layer and the electrode.

When the acrylic type resin of the embodiment B contains the unsaturated carboxylic anhydride unit, the content of the unsaturated carboxylic anhydride unit contained in the acrylic type resin is preferably 1% by mass or more, more preferably 5% by mass or more, and still more preferably 10% by mass or more with respect to the total monomer units from the viewpoint of improving the adhesiveness between the heat-resistant porous layer and the electrode.

When the acrylic type resin contains the unsaturated carboxylic anhydride unit, the content of the unsaturated carboxylic anhydride unit contained in the acrylic type resin is preferably 50% by mass or less, more preferably 40% by mass or less, and still more preferably 30% by mass or less with respect to the total monomer units from the viewpoint of suppressing the glass transition temperature of the acrylic type resin to 150°C or less and enabling the adhesiveness to the electrode by the dry heat press.

The glass transition temperature (Tg) of the acrylic type resin of the embodiment B is preferably in the range of from -20°C to 150°C. As the Tg of the acrylic type resin is lower, the fluidity of the acrylic type resin is enhanced by the dry heat press, so the polymer chain penetrates into the unevenness of the electrode surface to exert an anchor effect and improve the bonding of the heat-resistant porous layer to the electrode. From the viewpoint, the Tg of the acrylic type resin is preferably 150°C or lower, more preferably 120°C or lower, and still more preferably 100°C or lower. When the Tg of the acrylic type resin is -20°C or higher, the adhesive porous layer hardly causes blocking.

The Tg of the acrylic type resin of the embodiment B can be controlled by changing the copolymerization ratio of the acrylic monomer, the styrene monomer, the unsaturated carboxylic anhydride, and the like using a FOX formula as a guideline.

The weight average molecular weight (Mw) of the acrylic type resin of the embodiment B is preferably from 10,000 to 500,000. When the Mw of the acrylic type resin is 10,000 or more, the adhesive strength with the electrode is further improved. When the Mw of the acrylic type resin is 500,000 or less, the fluidity of the heat-resistant porous layer tends to increase during the dry heat press. The Mw of the acrylic type resin is more preferably from 30,000 to 300,000, and still more preferably from 50,000 to 200,000.

In the embodiment B, the mass ratio of the polyvinylidene fluoride type resin and the acrylic type resin (polyvinylidene fluoride type resin : acrylic type resin) contained in the heat-resistant porous layer is from 90:10 to 50:50, more preferably from 85:15 to 65:35, and still more preferably from 80:20 to 70:30 from the viewpoint of the balance between the suppression of the thermal shrinkage and the adhesiveness to the electrode by the dry heat press.

In the embodiment B, the total content of the polyvinylidene fluoride type resin and the acrylic type resin contained in the heat-resistant porous layer is preferably from 85% by mass to 100% by mass, more preferably from 90% by mass to 100% by mass, and still more preferably from 95% by mass to 100% by mass with respect to the total amount of all the resins contained in the heat-resistant porous layer.

- Other Resins of Embodiment B -

In the embodiment B, the heat-resistant porous layer may contain resins other than the polyvinylidene fluoride type resin and the acrylic type resin. The other resins in the embodiment B are synonymous with the other resins in the embodiment A. A specific aspect and a preferred aspect of the other resins in the embodiment B are the same as the specific aspect and the preferred aspect of the other resins in the embodiment A.

In the embodiment B, the content of the resins other than the polyvinylidene fluoride type resin and the acrylic type resin contained in the heat-resistant porous layer is preferably from 0% by mass to 15% by mass, more preferably from 0% by mass to 10% by mass, and still more preferably from 0% by mass to 5% by mass with respect to the total amount of all the resins contained in the heat-resistant porous layer.

- First Inorganic Particle in First Embodiment -

The first inorganic particles of the first embodiment have an average primary particle size of from 0.01 $\mu$m to 0.3 $\mu$m.

The average primary particle size of the first inorganic particles of the first embodiment is 0.3 $\mu$m or less, more preferably 0.2 $\mu$m or less, and still more preferably 0.1 $\mu$m or less from the viewpoint of increasing the surface area (specific surface area) of the inorganic particles per unit volume, and densely filling the inorganic particles to suppress the thermal shrinkage of the heat-resistant porous layer.

The average primary particle size of the first inorganic particles of the first embodiment is 0.01 $\mu$m or more, more preferably 0.03 $\mu$m or more, and still more preferably 0.05 $\mu$m or more from the viewpoint of the actual size of the inorganic particles and ease of handling.

As the first inorganic particles of the first embodiment, two or more kinds of inorganic particles having different average primary particle sizes may be used in combination, and each average primary particle size is preferably in the above range.

The material of the first inorganic particles of the first embodiment is not limited. Examples of the first inorganic particles include metal sulfate particle, metal hydroxide particle, metal oxide particle, metal nitride particle, metal fluoride particle, and clay mineral particle.

The first inorganic particles of the first embodiment are preferably the metal sulfate particles from the viewpoint of being stable with respect to an electrolytic solution and suppressing gas generation. Examples of the metal sulfate particles include particles of barium sulfate ($BaSO_4$), particles of strontium sulfate ($SrSO_4$), particles of calcium sulfate ($CaSO_4$), particles of calcium sulfate dihydrate ($CaSO_4 \cdot 2H_2O$), particles of alunite ($KAl_3(SO_4)_2(OH)_6$), and particles of jarosite ($KFe_3(SO_4)_2(OH)_6$). Among them, particles of barium sulfate ($BaSO_4$) are preferable. The metal sulfate particles may be used singly or in combination of two or more kinds thereof.

- Second Inorganic Particle in First Embodiment -

The second inorganic particles of the first embodiment have an average primary particle size larger than that of the first inorganic particles. A numerical range of the average primary particle size of the second inorganic particles is not limited. The average primary particle size of the second inorganic particles may be larger than that of the first inorganic particle, and may be 0.3 $\mu$m or less or more than 0.3 $\mu$m.

In the first embodiment, a ratio of the average primary particle size of the second inorganic particles /the average primary particle size of the first inorganic particles is preferably more than 1 and 200 or less, more preferably more than 3 and 100 or less, and still more preferably more than 5 and 50 or less.

The average primary particle size of the second inorganic particles of the first embodiment is preferably 0.4 $\mu$m or more, more preferably 0.5 $\mu$m or more, and still more preferably 0.6 $\mu$m or more from the viewpoint of forming appropriate irregularities on the surface of the heat-resistant porous layer, and as a result, the excellent adhesiveness to the electrode by the dry heat press.

The average primary particle size of the second inorganic particles of the first embodiment is preferably 2.0 $\mu$m or less, more preferably 1.5 $\mu$m or less, and still more preferably 1.0 $\mu$m or less from the viewpoint of increasing the surface area (specific surface area) of the inorganic particles per unit volume and densely filling the inorganic particles to suppress the thermal shrinkage of the heat-resistant porous layer.

As the second inorganic particles of the first embodiment, two or more kinds of inorganic particles having different average primary particle sizes may be used in combination, and each average primary particle size is preferably in the above range.

The material of the second inorganic particles of the first embodiment is not limited. Examples of the second inorganic particles include metal hydroxide particles, metal oxide particles, metal nitride particles, metal fluoride particles, and clay mineral particles.

The second inorganic particles of the first embodiment are preferably the metal hydroxide particles from the viewpoint of flame retardancy. Examples of the metal hydroxide particles include particles of magnesium hydroxide ($Mg(OH)_2$), particles of aluminum hydroxide ($Al(OH)_3$), particles of calcium hydroxide ($Ca(OH)_2$), and particles of nickel hydroxide ($Ni(OH)_2$). Among them, the particles of magnesium hydroxide ($Mg(OH)_2$) are most preferable. The metal hydroxide particles may be used singly or in combination of two or more kinds thereof.

In the embodiment A, the mass ratio of the first inorganic particles and the second inorganic particles (first inorganic particles : second inorganic particles) contained in the heat-resistant porous layer is preferably from 90:10 to 10:90, more preferably from 80:20 to 40:60, and still more preferably from 7:25 to 45:55 from the viewpoint of the balance between the suppression of the thermal shrinkage and the adhesiveness to the electrode by the dry heat press.

In the embodiment B, the mass ratio of the first inorganic particle and the second inorganic particle (first inorganic particles : second inorganic particles) contained in the heat-resistant porous layer is preferably from 95:5 to 10:90, more preferably from 90:10 to 50:50, and still more preferably from 85:15 to 55:45 from the viewpoint of the balance between the suppression of the thermal shrinkage and the adhesiveness to the electrode by the dry heat press.

The average primary particle size of the inorganic particles of the first embodiment is obtained by measuring major diameters of 100 inorganic particles randomly selected in observation with a scanning electron microscope (SEM), and averaging the major diameters of 100 inorganic particles.

A sample used for measuring the average primary particle size is inorganic particles as a material for forming the heat-resistant porous layer, or inorganic particles extracted from the heat-resistant porous layer of the separator.

When the inorganic particles as the material for forming the heat-resistant porous layer are used as a measurement sample, the average primary particle sizes of each of the prepared first inorganic particles and second inorganic particles are measured.

When the inorganic particles extracted from the heat-resistant porous layer of the separator are used as the measurement sample, the average primary particle size is determined by a position of a peak appearing in a particle size distribution of the average primary particle size. A first peak derived from the first inorganic particles appears in a range of from 0.01 $\mu$m to 0.3 $\mu$m and a second peak derived from the second inorganic particles appears in a range larger than the first peak, as a result of which it can be determined that the inorganic particles contain the first inorganic particles and the second inorganic particles.

The method of extracting inorganic particles from a heat-resistant porous layer of a separator is not limited, and examples thereof include a method in which the heat-resistant porous layer peeled off from the separator is immersed in an organic solvent that dissolves a resin, and the resin is dissolved with the organic solvent to extract the inorganic particles. Alternatively, the heat-resistant porous layer peeled off from the separator may be heated to about 800°C to remove the resin, thereby extracting the inorganic particles.

The particle shape of the inorganic particles of the first embodiment is not limited, and may be any of a spherical shape, an elliptical shape, a plate shape, a needle shape, and an amorphous shape. The inorganic particles are preferably plate-shaped or spherical particles or non-aggregated primary particles from the viewpoint of suppressing a short circuit of the battery or from the viewpoint of easily filling the heat-resistant porous layer densely.

In the separator of the first embodiment, the mass ratio of the inorganic particles in the heat-resistant porous layer is 50% by mass or more, more preferably 55% by mass or more, and still more preferably 60% by mass or more from the viewpoint of the heat resistance of the separator.

In the separator of the first embodiment, the mass ratio of the inorganic particles in the heat-resistant porous layer is 90% by mass or less, more preferably 85% by mass or less, and still more preferably 80% by mass or less from the viewpoint of the excellent adhesiveness to the electrode by the dry heat press, the viewpoint of the moldability of the heat-resistant porous layer, and the viewpoint that the heat-resistant porous layer is less likely to be peeled off from the porous substrate.

-Organic Filler of First Embodiment-

Examples of the organic filler include particles of a crosslinked polymer such as crosslinked poly (meth)acrylic acid, crosslinked poly (meth)acrylate, crosslinked polysilicone, crosslinked polystyrene, crosslinked polydivinylbenzene, a styrene-divinylbenzene copolymer crosslinked product, a melamine resin, a phenol resin, or a benzoguanamine-formaldehyde condensate; and particles of a heat resistant polymer such as polysulfone, polyacrylonitrile, aramid, or polyacetal. These organic fillers may be used singly or in combination of two or more kinds thereof.

-Other Components of First Embodiment-

In the separator of the first embodiment, the heat-resistant porous layer may contain an additive, for example, a dispersant such as a surfactant, a wetting agent, an antifoaming agent, or a pH adjuster. The dispersant is added to a coating liquid for forming a heat-resistant porous layer for the purpose of improving dispersibility, coatability, or storage stability. The wetting agent, the antifoaming agent, or the pH adjuster is added to a coating liquid for forming a heat-resistant porous layer for the purpose of, for example, improving compatibility with the porous substrate, suppressing mixing of air into the coating liquid, or adjusting the pH.

[Characteristics of Heat-resistant porous layer of First Embodiment]

In the embodiment A, the thickness of the heat-resistant porous layer is preferably 1 μm or more per one side, more preferably 1.5 μm or more per one side, and still more preferably 2.0 μm or more per one side from the viewpoint of heat resistance or adhesiveness to an electrode of the separator, and is preferably 8 μm or less per one side, more preferably 7.0 μm or less per one side, and still more preferably 6.0 μm or less per one side from the viewpoint of ion permeability or energy density of a battery.

In the embodiment B, the thickness of the heat-resistant porous layer is preferably 1 μm or more per one side, more preferably 1.5 μm or more per one side, and still more preferably 2 μm or more per one side from the viewpoint of heat resistance or adhesiveness to an electrode of the separator, and is preferably 8 μm or less per one side, more preferably 7 μm or less per one side, and still more preferably 6 μm or less per one side from the viewpoint of ion permeability or energy density of a battery.

In the embodiment A, the thickness of the heat-resistant porous layer is preferably 2 μm or more, more preferably 3 μm or more, still more preferably 4 μm or more, and preferably 16 μm or less, more preferably 12 μm or less, and still more preferably 10 μm or less, as the total thickness of both sides.

In an embodiment B, the thickness of the heat-resistant porous layer is preferably 2 μm or more, more preferably 4 μm or more, still more preferably 6 μm or more, and preferably 16 μm or less, more preferably 12 μm or less, and still more preferably 10 μm or less, as the total thickness of both sides.

When the heat-resistant porous layer of the first embodiment is provided on both sides of the porous substrate, the difference between the thickness of the heat-resistant porous layer on one side of the porous substrate and the thickness of the heat-resistant porous layer on the other side of the porous substrate is preferably 25% or less with respect to the total thickness of both sides, and the lower the difference, the more preferable.

In the first embodiment, the mass per unit area of the heat-resistant porous layer is preferably 2.0 g/m² or more, more preferably 3.0 g/m² or more, and still more preferably 4.0 g/m² or more as a total of both sides from the viewpoint of heat resistance and adhesiveness to an electrode of the separator, and is preferably 30.0 g/m² or less, more preferably 25.0 g/m² or less, and still more preferably 20.0 g/m² or less as a total of both sides from the viewpoint of ion permeability or energy density of a battery.

When the heat-resistant porous layer of first embodiment is provided on both sides of the porous substrate, the difference in mass between one side and the other side of the heat-resistant porous layer is preferably 25% by mass or less with respect to the total mass of both sides from the viewpoint of suppressing the curling of the separator or improving the cycle characteristics of the battery.

The porosity of the heat-resistant porous layer of the first embodiment is preferably 25% or more, more preferably 30% or more, and still more preferably 35% or more from the viewpoint of the ion permeability and adhesiveness to an electrode, and is preferably 60% or less, more preferably 55% or less, and still more preferably 50% or less from the viewpoint of the mechanical strength and heat resistance of the heat-resistant porous layer. The porosity ε (%) of the heat-resistant porous layer is obtained by the following formula.

$$\varepsilon = \{1 - (Wa/da + Wb/db + Wc/dc + ... \ + Wn/dn)/t\} \times 100$$

Here, the constituent materials of the heat-resistant porous layer are a, b, c,..., and n, the mass per unit area of the constituent materials are Wa, Wb, Wc,..., and Wn (g/cm$^2$), the true densities of the constituent materials are da, db, dc,..., and dn (g/cm$^3$), and the thickness of the heat-resistant porous layer is t (cm).

The average pore size of the heat-resistant porous layer of the first embodiment is preferably 10 nm or more, and more preferably 20 nm or more from the viewpoint that the pores are less likely to be blocked even if the resin contained in the heat-resistant porous layer swells when the heat-resistant porous layer is impregnated with the electrolytic solution, and is preferably 300 nm or less, and more preferably 200 nm or less from the viewpoint of the adhesiveness of the heat-resistant porous layer to the electrode or from the viewpoint of the excellent cycle characteristics and load characteristics of the battery.

The average pore size (nm) of the heat-resistant porous layer is calculated by the following formula, assuming that all pores are cylindrical.

$$d = 4 \ V/S$$

In the formula, d represents an average pore size (diameter) of the heat-resistant porous layer, V represents a pore volume per square meter of the heat-resistant porous layer, and S represents a pore surface area per square meter of the heat-resistant porous layer.

The pore volume V per square meter of the heat-resistant porous layer is calculated from the porosity of the heat-resistant porous layer.

The pore surface area S per square meter of the heat-resistant porous layer is determined by the following method.

First, a specific surface area (m$^2$/g) of the porous substrate and a specific surface area (m$^2$/g) of the separator are calculated from a nitrogen gas adsorption amount by applying a BET formula to a nitrogen gas adsorption method. These specific surface areas (m$^2$/g) are multiplied by basis weights (g/m$^2$) of the porous substrate and the separator, respectively, to calculate a pore surface area per square meter. Then, the pore surface area per square meter of the porous substrate is subtracted from the pore surface area per square meter of the separator to calculate the pore surface area S per square meter of the heat-resistant porous layer. Basis weights refer to a mass per unit area.

[Characteristics of Separator of First Embodiment]

The thickness of the separator of the fist embodiment is preferably 5 μm or more, more preferably 8 μm or more, and still more preferably 10 μm or more from the viewpoint of the mechanical strength of the separator, and is preferably 30 μm or less, more preferably 25 μm or less, and still more preferably 20 μm or less from the viewpoint of the energy density of the battery.

The puncture strength of the separator of the fist embodiment is preferably from 160 gf (1.6N) to 1000 gf (9.8N), and more preferably from 200 gf (2.0N) to 600 gf (5.9N) from the viewpoint of the mechanical strength of the separator or the short circuit resistance of the battery. The method of measuring the puncture strength of the separator is the same as the method of measuring the puncture strength of the porous substrate.

The porosity of the separator of the fist embodiment is preferably from 30% to 65%, and more preferably from 35% to 60% from the viewpoint of the adhesiveness to the electrode, the handleability of the separator, the ion permeability, or the mechanical strength.

The Gurley value (JIS P8117: 2009) of the separator of the fist embodiment is preferably from 100 sec/100 mL to 600 sec/100 mL, and more preferably from 120 sec/100 mL to 500 sec/100 mL from the viewpoint of mechanical strength and load characteristics of the battery.

The separator of the fist embodiment has, as a value obtained by subtracting a Gurley value of the porous substrate from a Gurley value of the separator, preferably 400 sec/100 mL or less, more preferably 300 sec/100 mL or less, still more preferably 200 sec/100 mL or less from the viewpoint of ion permeability. A lower limit of the value obtained by subtracting a Gurley value of the porous substrate from a Gurley value of the separator is not particularly limited, but is preferably 10 seconds/100 mL or more in the separator of the fist embodiment.

The separator of the embodiment A has a shrinkage ratio, when heat-treated at 135°C for 1 hour, in an MD direction of preferably 20% or less, more preferably 15% or less, still more preferably 10% or less.

The separator of the embodiment A has a shrinkage ratio, when heat-treated at 135°C for 1 hour, in a TD direction of preferably 20% or less, more preferably 15% or less, still more preferably 10% or less.

The separator of the embodiment A has an area shrinkage ratio, when heat-treated at 135°C for 1 hour, of preferably 35% or less, more preferably 30% or less, still more preferably 20% or less.

The separator of the first embodiment has a shrinkage ratio, when heat-treated at 150°C for 1 hour, in an MD direction of preferably 30% or less, more preferably 20% or less, still more preferably 15% or less.

The separator of the first embodiment has a shrinkage ratio, when heat-treated at 150°C for 1 hour, in a TD direction of preferably 30% or less, more preferably 20% or less, still more preferably 15% or less.

The separator of the first embodiment has an area shrinkage ratio, when heat-treated at 150°C for 1 hour, of preferably 50% or less, more preferably 40% or less, still more preferably 30% or less.

In the first embodiment, the area shrinkage ratio when the separator is heated at 135°C or 150°C for one hour is determined by the following measuring method.

The separator is cut out into a rectangle of 180 mm in an MD direction × 60 mm in a TD direction to prepare a test piece. This test piece is marked at points of 20 mm and 170 mm from one end on a line bisecting the test piece in the TD direction (referred to as points A and B, respectively). Furthermore, the test piece is marked at points of 10 mm and 50 mm from one end on a line bisecting the test piece in the MD direction (referred to as points C and D, respectively). A clip is attached to the marked test piece (a point where the clip is attached is between the point A and an end closest to the point A). The test piece is hung in an oven in which the temperature is adjusted to 135°C or 150°C to be heated under no tension for one hour. A length between A and B and a length between C and D are measured before and after the heat treatment, and an area shrinkage ratio is calculated by the following formula.

$$\text{Area shrinkage ratio (\%)} = \{1 - (\text{length between A and B after heat treatment} \div \text{length between A and B before heat treatment}) \times (\text{length between C and D after heat treatment} \div \text{length between C and D before heat treatment})\} \times 100$$

The separator of the first embodiment may further include other layers other than the porous substrate and the heat-resistant porous layer. Examples of the form further including other layers include a form in which a heat-resistant porous layer is provided on one side of the porous substrate, and an adhesive porous layer is provided on the other side of the porous substrate mainly for adhesion to an electrode.

[Method of Producing Separator of First Embodiment]

The separator of the first embodiment can be produced, for example, by forming the heat-resistant porous layer on the porous substrate by a wet coating method or a dry coating method. In the first embodiment, the wet coating method is a method of solidifying a coating layer in a coagulation liquid, and the dry coating method is a method of drying a coating layer to solidify the coating layer. Hereinafter, embodiment examples of the wet coating method will be described.

The wet coating method is a method of applying a coating liquid containing a resin and inorganic particles onto a porous substrate, immersing the resulting product in a coagulation liquid to solidify the coating layer, pulling the resulting product out of the coagulation liquid, washing the resulting product with water, and drying the resulting product.

The coating liquid for forming the heat-resistant porous layer is prepared by dissolving or dispersing a resin and inorganic particles in a solvent. In the coating liquid, a component other than the resin and the inorganic particles is dissolved or dispersed, if necessary.

A solvent used for preparing the coating liquid includes a solvent that dissolves the resin (hereinafter, also referred to as "good solvent"). Examples of the good solvent include a polar amide solvent such as N-methylpyrrolidone, dimethylacetamide, or dimethylformamide.

The solvent used for preparing the coating liquid preferably contains a phase separation agent that induces phase separation from the viewpoint of forming a porous layer having a favorable porous structure. Therefore, the solvent used for preparing the coating liquid is preferably a mixed solvent of a good solvent and a phase separation agent. The phase separation agent is preferably mixed with a good solvent in such an amount that a viscosity suitable for coating can be ensured. Examples of the phase separation agent include water, methanol, ethanol, propyl alcohol, butyl alcohol, butanediol, ethylene glycol, propylene glycol, and tripropylene glycol.

The solvent used for preparing the coating liquid is preferably a mixed solvent of a good solvent and a phase separation agent, containing 60% by mass or more of the good solvent and from 5% by mass to 40% by mass of the phase separation agent from the viewpoint of forming a favorable porous structure.

The resin concentration of the coating liquid is preferably from 3% by mass to 10% by mass from the viewpoint of forming a favorable porous structure. The inorganic particles concentration of the coating liquid is preferably from 2% by mass to 50% by mass from the viewpoint of forming a favorable porous structure.

The coating liquid may contain a dispersant such as a surfactant, a wetting agent, an antifoaming agent, or a pH adjuster. These additives may be those remain in the heat-resistant porous layer as long as the additives are electrochemically stable in the range of use of a non-aqueous secondary battery and do not inhibit the reaction in the battery.

Examples of a means of applying the coating liquid to the porous substrate include a Meyer bar, a die coater, a reverse roll coater, a roll coater, and a gravure coater. In a case where the heat-resistant porous layers are formed on both sides of the porous substrate, it is preferable to simultaneously apply the coating liquid to both sides of the porous substrate from the viewpoint of productivity.

The coating layer is solidified by immersing the porous substrate on which the coating layer is formed in a coagulation liquid, and solidifying the resin while phase separation is induced in the coating layer. As a result, a laminated body composed of the porous substrate and the heat-resistant porous layer is obtained.

The coagulation liquid generally contains the good solvent and the phase separation agent used for preparing the coating liquid, and water. A mixing ratio between the good solvent and the phase separation agent is preferably matched with the mixing ratio of the mixed solvent used for preparing the coating liquid in terms of production. The content of water in the coagulation liquid is preferably from 40% by mass to 90% by mass from viewpoints of formation of a porous structure and productivity. The temperature of the coagulation liquid is, for example, from 20°C to 50°C.

After the coating layer is solidified in the coagulation liquid, the laminated body is pulled out of the coagulation liquid and washed with water. By washing the laminated body with water, the coagulation liquid is removed from the laminated body. Furthermore, by drying the laminated body, water is removed from the laminated body. Washing with water is performed, for example, by transporting the laminated body in a water washing bath. Drying is performed, for example, by transporting the laminated body in a high-temperature environment, blowing air to the laminated body, or bringing the laminated body into contact with a heat roll. The drying temperature is preferably from 40°C to 80°C.

The separator of the first embodiment can also be produced by a dry coating method. The dry coating method is a method of applying a coating liquid onto a porous substrate, drying the coating layer to remove a solvent by evaporation, and thereby forming a heat-resistant porous layer on the porous substrate. However, since the porous layer tends to be dense in the dry coating method as compared with the wet coating method, the wet coating method is more preferable from the viewpoint of obtaining a favorable porous structure.

The separator of the first embodiment can also be produced by a method of preparing a heat-resistant porous layer as an independent sheet, stacking the heat-resistant porous layer on a porous substrate, and forming a composite by thermal press bonding or an adhesive. Examples of the method of preparing a heat-resistant porous layer as an independent sheet include a method of forming a heat-resistant porous layer on a release sheet by applying the above-described wet coating method or dry coating method.

<Non-aqueous secondary battery of first embodiment>

A non-aqueous secondary battery of the first embodiment is a non-aqueous secondary battery that obtains an electromotive force by doping and dedoping lithium ion, and includes a positive electrode, a negative electrode, and a separator for a non-aqueous secondary battery of the first embodiment. The doping means occlusion, support, adsorption, or insertion, and means a phenomenon that lithium ions enter an active material of an electrode such as a positive electrode.

The non-aqueous secondary battery of the first embodiment has a structure in which, for example, a battery element in which a negative electrode and a positive electrode face each other with a separator interposed therebetween is enclosed in an exterior material together with an electrolytic solution. The non-aqueous secondary battery of the first embodiment is suitable for a non-aqueous electrolyte secondary battery, particularly for a lithium ion secondary battery.

In the non-aqueous secondary battery of the first embodiment, since the separator of the first embodiment is excellent in adhesion to the electrode by the dry heat press, the production yield can be improved.

The active material layer of the electrode preferably contains a large amount of binder resin from the viewpoint of the adhesiveness to the separator, and preferably contains a large amount of active material and has a relatively small amount of binder resin from the viewpoint of increasing the energy density of the battery. Since the separator of the first embodiment is excellent in adhesion to the electrode, the amount of binder resin in the active material layer can be reduced to increase the amount of active material, and thus the energy density of the battery can be increased.

Hereinafter, aspect examples of the positive electrode, negative electrode, electrolyte solution, and exterior material included in the non-aqueous secondary battery according to the first embodiment will be described.

Examples of an embodiment of the positive electrode include a structure in which an active material layer containing a positive electrode active material and a binder resin is formed on a current collector. The active material layer may further contain a conductive auxiliary agent. Examples of the positive electrode active material include a lithium-containing transition metal oxide, and specific examples thereof include $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, and $LiAl_{1/4}Ni_{3/4}O_2$. Examples of the binder resin include a polyvinylidene fluoride type resin, and a styrene-butadiene copolymer. Examples of the conductive auxiliary agent include carbon materials such as acetylene black, Ketjen black, and graphite powder. Examples of the current collector include an aluminum foil, a titanium foil, and a stainless steel foil, each having a thickness of from 5 $\mu$m to 20 $\mu$m.

In the non-aqueous secondary battery of the first embodiment, since a polyvinylidene fluoride type resin, which is included in the heat-resistant porous layer of the separator according to the first embodiment, has excellent oxidation resistance, when the heat-resistant porous layer is disposed by contacting the positive electrode of the non-aqueous secondary battery, a positive electrode active material that can be operated at a high voltage of 4.2 V or more, such as $LiMn_{1/2}Ni_{1/2}O_2$ and $LiCo_{1/3}Mn_{1/3}Ni_{1/3}O_2$, can be easily applicable.

Examples of an embodiment of the negative electrode include a structure in which an active material layer containing a negative electrode active material and a binder resin is formed on a current collector. The active material layer may further contain a conductive auxiliary agent. Examples of the negative electrode active material include materials capable of electrochemically occluding lithium ion. Specific examples thereof include carbon materials; and alloys of lithium in combination with silicon, tin, aluminum; wood's alloy, or the like. Examples of the binder resin include a polyvinylidene fluoride type resin and a styrene-butadiene copolymer. Examples of the conductive auxiliary agent include carbon materials such as acetylene black, Ketjen black, graphite powder, and extra fine carbon fiber. Examples of the current collector include a copper foil, a nickel foil, and a stainless steel foil, each having a thickness of from 5 $\mu$m to 20 $\mu$m. Instead of using the negative electrode described above, a metal lithium foil may be used as the negative electrode.

The electrolyte solution is, for example, a solution in which a lithium salt is dissolved in a non-aqueous solvent. Examples of the lithium salt include $LiPF_6$, $LiBF_4$, and $LiClO_4$. Examples of the non-aqueous solvent include cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as $\gamma$-butyrolactone and $\gamma$-valerolactone. These non-aqueous solvent may be used singly, or in combination. As the electrolyte solution, a solution is preferred, which is obtained by mixing a cyclic carbonate and a chain carbonate at a mass ratio (cyclic carbonate : chain carbonate) of from 20:80 to 40:60, and dissolving a lithium salt therein to give a concentration of from 0.5 mol/L to 1.5 mol/L.

Examples of the exterior material include a metal can and an aluminum laminated film pack. The shape of the battery may be a square shape, a cylindrical shape, a coin shape, and the like, but the separator of the first embodiment is suitable for any one of these shapes.

Examples of the method for producing a non-aqueous secondary battery of the first embodiment include a production method including a process of bonding a separator to an electrode by dry heat press, and a sealing process of sealing the electrode and the separator bonded to each other inside an exterior material together with an electrolytic solution.

More specifically, the above production method preferably includes a laminating process of producing a laminated body in which the separator of the first embodiment is disposed between the positive electrode and the negative electrode, a dry adhesion process of performing the dry heat pressing on the laminated body to bond at least one of the positive electrode and the negative electrode to the separator, and a sealing process of sealing the laminated body subjected to the dry adhesion process inside the exterior material together with the electrolytic solution.

The laminating process is, for example, a process of disposing the separator of the first embodiment between the positive electrode and the negative electrode, a process of winding the separator in the length direction to produce a wound body, or a process of laminating the positive electrode, the separator, and the negative electrode by at least one layer in this order.

The dry adhering process may be carried out before the laminated body is stored in the outer packaging material (e.g. a pack made of an aluminum laminate film), or after the laminated body is stored in the outer packaging material. That is, the laminated body in which the electrode and the separator are adhered to each other by dry heat press may be stored in the outer packaging material, or the electrode and the separator may be adhered to each other by performing dry heat press from above the outer packaging material after storage of the laminated body in the outer packaging material.

The pressing temperature in the dry adhering process is preferably from 30°C to 100°C. When the pressing temperature is in the above-mentioned range, the electrode and the separator are favorably adhered to each other, and the separator can be moderately expanded in a transverse direction, so that a short-circuit of the battery hardly occurs. The press pressure in the dry adhering process is preferably from 0.2MPa to 9MPa. Preferably, the pressing time is adjusted according to the pressing temperature and the press pressure. For example, the pressing time is adjusted to fall within a range of 0.1 minutes to 60 minutes.

The laminated body may be temporarily adhered by subjecting the laminated body to room temperature press at normal temperature (pressurization at normal temperature) after the lamination process and prior to the dry adhering process.

The sealing process is a process of sealing an opening of the exterior material after injecting the electrolytic solution into the exterior material in which the laminated body is housed. The opening of the exterior material is sealed by, for example, bonding the opening of the exterior material with an adhesive or thermocompression-bonding the opening of the exterior material by heating and pressurization. It is preferable to bring the inside of the exterior body into a vacuum state before sealing the opening of the exterior material.

In the sealing process, it is preferable that the opening of the exterior material is thermocompression-bonded by heating and pressurization, and at the same time, the laminated body is heat-pressed from above the exterior material. By performing the hot pressing treatment (wet heat press) in a state where the laminated body and the electrolytic solution coexist, the adhesion between the electrode and the separator is further strengthened.

As the conditions of the wet heat press, the pressing temperature is preferably from 60°C to 90°C, and the pressing pressure is preferably from 0.2 MPa to 2 MPa. The pressing time is preferably adjusted according to the pressing temperature and the pressing pressure, and is adjusted, for example, in a range of from 0.5 minutes to 60 minutes.

< Separator for Non-aqueous Secondary Battery of Second Embodiment>

A separator for a non-aqueous secondary battery of second embodiment (hereinafter, also simply referred to as "separator of second embodiment") of the disclosure includes a porous substrate and a heat-resistant porous layer provided on one side or on both sides of the porous substrate.

In the separator of the second embodiment, a heat-resistant porous layer contains a resin and inorganic particles; a content of the inorganic particles in the heat-resistant porous layer is from 50% by mass to 90% by mass; and the inorganic particles contain first inorganic particles that are metal sulfate particles and second inorganic particles that are inorganic particles other than metal sulfate particles.

In the separator of the second embodiment, the content of the inorganic particles in the heat-resistant porous layer is 50% by mass or more from the viewpoint of the heat resistance of the separator, and is 90% by mass or less from the viewpoint of suppressing the viscosity of the coating liquid for forming the heat-resistant porous layer to a low level, the viewpoint that the heat-resistant porous layer is less likely to be peeled off from the porous substrate, and the viewpoint that the heat-resistant porous layer is excellent in adhesiveness to the electrode.

In the separator of the second embodiment, the heat-resistant porous layer contains first inorganic particles that are metal sulfate particles and second inorganic particles that are inorganic particles other than metal sulfate particles. In order to enhance the heat resistance of the heat-resistant porous layer, in the present embodiment, the content of the inorganic particles in the heat-resistant porous layer is 50% by mass or more, but in order to suppress the increase in viscosity of the coating liquid for forming the heat-resistant porous layer over time, some of the inorganic particles are the metal sulfate particles. However, when all the inorganic particles are the metal sulfate particles, since the viscosity of the coating liquid immediately after preparation is relatively high, some of the inorganic particles are inorganic particles other than metal sulfate particles.

By the action of each of the above configurations, the separator of the second embodiment is excellent in heat resistance that it is difficult to shrink under high temperature (for example, 150°C), and is easy to form the heat-resistant porous layer, so the productivity is high.

Hereinafter, details of the porous substrate and the heat-resistant porous layer included in the separator of the second embodiment will be described.

[Porous substrate of Second Embodiment]

The porous substrate in the second embodiment is synonymous with the porous substrate in the first embodiment. A specific form and a preferred form of the porous substrate and the characteristics of the porous substrate in the second embodiment are the same as the specific form and the preferred form of the porous substrate and the characteristics of the porous substrate in the first embodiment.

[Heat-resistant Porous Layer of Second Embodiment]

The heat-resistant porous layer of the second embodiment has a structure in which a large number of micropores are provided inside and the micropores are connected to each other, and is a layer in which a gas or a liquid can pass from one surface to the other surface.

The heat-resistant porous layer of the second embodiment is preferably provided as an outermost layer of the separator on one surface or both surfaces of the porous substrate, and is preferably a layer that adheres to the electrode when the separator and the electrode are stacked and pressed or hot-pressed.

The heat-resistant porous layer of the second embodiment may be provided on only one surface of the porous substrate or on both surfaces of the porous substrate. When the heat-resistant porous layer is present on both surfaces of the porous substrate, the bonding of the separator to both electrodes of the battery is good. In addition, curling is less likely to occur in the separator, and the handleability during the manufacturing of the battery is excellent. When the heat-resistant porous layer is present only on one surface of the porous substrate, ion permeability of the separator is more excellent. In addition, the thickness of the entire separator can be suppressed, and a battery having a higher energy density can be manufactured.

In the separator of the second embodiment, the heat-resistant porous layer contains a resin and inorganic particles, and the inorganic particles contain first inorganic particles that are metal sulfate particles and second inorganic particles that are inorganic particles other than metal sulfate particles. The heat-resistant porous layer may contain other components such as an organic filler.

[Resin of Second Embodiment]

The resin contained in the heat-resistant porous layer of the second embodiment is preferably a resin that is stable in an electrolytic solution, is electrochemically stable, has a function of connecting inorganic particles, and can adhere to an electrode. The heat-resistant porous layer may contain only one resin or two or more resins.

A type of resin contained in the heat-resistant porous layer of the second embodiment is not limited. Examples of the resin include a homopolymer or a copolymer of a polyvinylidene fluoride type resin, an acrylic type resin, a fluorinated rubber, a styrene-butadiene copolymer or vinyl nitrile compounds (acrylonitrile, methacrylonitrile, and the like), carboxymethyl cellulose, hydroxyalkyl cellulose, polyvinyl alcohol, polyvinyl butyral, polyvinyl pyrrolidone, polyethers (polyethylene oxide, polypropylene oxide, and the like), polyamide, wholly aromatic polyamide, polyimide, polyamide imide, polysulfone, polyketone, polyether ketone, polyether sulfone, polyether imide, and mixtures thereof.

Examples of the polyvinylidene fluoride type resin of the second embodiment include a homopolymer (that is, polyvinylidene fluoride) of vinylidene fluoride; a copolymer of vinylidene fluoride and halogen-containing monomers such as hexafluoropropylene, tetrafluoroethylene, trifluoroethylene, chlorotrifluoroethylene, vinyl fluoride, and trichloroethylene; and mixtures thereof. The polyvinylidene fluoride type resin may be used singly, or may be used in combination of two or more thereof.

From the viewpoint of suppressing the increase in viscosity of the coating liquid for forming the heat-resistant porous layer to a low level, the polyvinylidene fluoride type resin of the second embodiment is preferably a polyvinylidene fluoride type resin in which interaction with a functional group of an inorganic particle is less likely to occur, specifically, a polyvinylidene fluoride type resin having no carboxy group and no ester bond.

[Inorganic Particle of Second Embodiment]

In the separator of the second embodiment, the content of the inorganic particles in the heat-resistant porous layer is 50% by mass or more, more preferably 55% by mass or more, and still more preferably 60% by mass or more from the viewpoint of the heat resistance of the separator.

In the separator of the second embodiment, the content of the inorganic particles in the heat-resistant porous layer is 90% by mass or less, more preferably 85% by mass or less, and still more preferably 80% by mass or less from the viewpoint of suppressing the viscosity of the coating liquid for forming the heat-resistant porous layer to a low level, that the heat-resistant porous layer is less likely to be peeled off from the porous substrate, and that the heat-resistant porous layer has the excellent adhesiveness to the electrode.

The particle shape of the inorganic particles of the second embodiment is not limited, and may be any of a spherical shape, an elliptical shape, a plate shape, a needle shape, and an amorphous shape. The inorganic particles are preferably plate-shaped or spherical particles or non-aggregated primary particles from the viewpoint of suppressing a short circuit of the battery or from the viewpoint of easily filling the heat-resistant porous layer densely.

The average primary particle size of the inorganic particles of the second embodiment is obtained by measuring major diameters of 100 inorganic particles randomly selected in observation with a scanning electron microscope (SEM), and averaging the major diameters of 100 inorganic particles.

A sample used for measuring the average primary particle size is inorganic particles as a material for forming the heat-resistant porous layer, or inorganic particles extracted from the heat-resistant porous layer of the separator.

When the inorganic particles as the material for forming the heat-resistant porous layer are used as a measurement sample, the average primary particle sizes of each of the prepared first inorganic particles and second inorganic particles are measured.

When the inorganic particles extracted from the heat-resistant porous layer of the separator are used as the measurement sample, the average primary particle size is determined by a position of a peak appearing in a particle size distribution of the average primary particle size.

The method of extracting inorganic particles from a heat-resistant porous layer of a separator is not limited, and examples thereof include a method in which the heat-resistant porous layer peeled off from the separator is immersed in an organic solvent that dissolves a resin, and the resin is dissolved with the organic solvent to extract the inorganic particles. Alternatively, the heat-resistant porous layer peeled off from the separator may be heated to about 800°C to remove the resin, thereby extracting the inorganic particles.

- First Inorganic Particle (metal sulfate particle) of Second embodiment -

The first inorganic particles of the second embodiment are metal sulfate particles. Examples of the metal sulfate particles include particles of barium sulfate ($BaSO_4$), particles of strontium sulfate ($SrSO_4$), particles of calcium sulfate

($CaSO_4$), particles of calcium sulfate dihydrate ($CaSO_4 \cdot 2H_2O$), particles of alunite ($KAl_3(SO_4)_2(OH)_6$), and particles of jalosite ($KFe_3(SO_4)_2(OH)_6$). Among them, particles of barium sulfate ($BaSO_4$) are preferable. The metal sulfate particles may be used singly or in combination of two or more kinds thereof.

The first inorganic particles of the second embodiment preferably have an average primary particle size of from 0.01 $\mu$m to 0.3 $\mu$m.

The average primary particle size of the first inorganic particles of the second embodiment is preferably 0.3 $\mu$m or less, more preferably 0.2 $\mu$m or less, and still more preferably 0.1 $\mu$m or less from the viewpoint of increasing the surface area (specific surface area) of the inorganic particles per unit volume and densely filling the inorganic particles to suppress the thermal shrinkage of the heat-resistant porous layer.

The average primary particle size of the first inorganic particles of the second embodiment is preferably 0.01 $\mu$m or more, more preferably 0.03 $\mu$m or more, and still more preferably 0.05 $\mu$m or more from the viewpoint of the actual size of the inorganic particles and suppressing the viscosity of the coating liquid for forming the heat-resistant porous layer to a low level.

In the first inorganic particles of the second embodiment, two or more kinds of metal sulfate particles having different average primary particle sizes may be used in combination, and each average primary particle size is preferably in the above range.

- Second Inorganic Particle (Inorganic Particle Other Than Metal Sulfate Particle) of Second Embodiment -

The second inorganic particles of the second embodiment are inorganic particles other than the metal sulfate particles. Examples of the second inorganic particles include metal hydroxide particles, metal oxide particles, metal carbonate particles, metal nitride particles, metal fluoride particles, and clay mineral particles. The second inorganic particles may be used singly or in combination of two or more kinds thereof. The second inorganic particles are preferably the metal hydroxide particles from the viewpoint of flame retardancy.

Examples of the metal hydroxide particles of the second embodiment include particles of magnesium hydroxide, aluminum hydroxide, calcium hydroxide, chromium hydroxide, zirconium hydroxide, cerium hydroxide, and nickel hydroxide. Among them, particles of magnesium hydroxide ($Mg(OH)_2$) are preferable.

Examples of the metal oxide particles of the second embodiment include particles of magnesium oxide, alumina, boehmite (alumina monohydrate), titania, silica, zirconia, barium titanate, and zinc oxide. Examples of the metal carbonate particles include particles of magnesium carbonate, and calcium carbonate. Examples of the metal nitride particles include particles of magnesium nitride, aluminum nitride, calcium nitride, and titanium nitride. Examples of the metal fluoride particles include particles of magnesium fluoride and calcium fluoride. Examples of the clay mineral particles include particles of calcium silicate, calcium phosphate, apatite, and talc.

The second inorganic particles of the second embodiment preferably have an average primary particle size of from 0.4 $\mu$m to 2.0 $\mu$m.

The average primary particle size of the second inorganic particles of the second embodiment is preferably 0.4 $\mu$m or more, more preferably 0.5 $\mu$m or more, and still more preferably 0.6 $\mu$m or more from the viewpoint of suppressing the viscosity of the coating liquid for forming the heat-resistant porous layer to a low level.

The average primary particle size of the second inorganic particles of the second embodiment is preferably 2.0 $\mu$m or less, more preferably 1.5 $\mu$m or less, and still more preferably 1.0 $\mu$m or less from the viewpoint of increasing the surface area (specific surface area) of the inorganic particles per unit volume and densely filling the inorganic particles to suppress the thermal shrinkage of the heat-resistant porous layer.

As the second inorganic particles of the second embodiment, two or more kinds of inorganic particles having different average primary particle sizes may be used in combination, and each average primary particle size is preferably in the above range.

In the second embodiment, a ratio of the average primary particle size of the second inorganic particles /the average primary particle size of the first inorganic particles is preferably more than 1 and 200 or less, more preferably more than 3 and 100 or less, and still more preferably more than 5 and 50 or less.

The mass ratio of the first inorganic particles and the second inorganic particles (first inorganic particles : second inorganic particles) contained in the heat-resistant porous layer of the second embodiment is preferably from 90:10 to 10:90, more preferably from 80:20 to 40:60, and still more preferably from 75:25 to 45:55 from the viewpoint of suppressing the increase in viscosity with time while suppressing the viscosity of the coating liquid immediately after preparation.

- Organic Filler of Second Embodiment -

The organic filler of the second embodiment is synonymous with as the organic filler of the first embodiment. A specific form and a preferred form of the organic filler in the second embodiment are the same as the specific form and the preferred form of the organic filler in the first embodiment.

- Other Components of Second Embodiment -

Other components in the heat-resistant porous layer of the separator of the second embodiment are synonymous with the other components in the first embodiment. A specific form and a preferred form of the other components in the second embodiment are the same as the specific form and the preferred form of the other components in the first embodiment.

[Characteristics of Heat-resistant Porous Layer of Second Embodiment]

The heat-resistant porous layer of the second embodiment has the following characteristics. A specific aspect and a preferred aspect of other characteristics of the heat-resistant porous layer of the second embodiment are the same as the specific aspect and the preferred aspect of the characteristics of the heat-resistant porous layer of the first embodiment.

A thickness of the heat-resistant porous layer of the second embodiment is preferably 2 $\mu$m or more, more preferably 4 $\mu$m or more, and still more preferably 6 $\mu$m or more, and is preferably 16 $\mu$m or less, more preferably 12 $\mu$m or less, and still more preferably 10 $\mu$m or less as the total thickness of both surfaces.

[Characteristics of Separator of Second Embodiment]

An MD shrinkage ratio and a TD shrinkage ratio of the separator of the second embodiment are based on the case of heat treatment at 150°C for 1 hour. A method of measuring an area shrinkage ratio when a separator is heat-treated at 150°C for 1 hour is the same as the method of measuring an area shrinkage ratio when the separator is heat-treated at 150°C for 1 hour in the separator of the first embodiment. A specific aspect and a preferred aspect of other characteristics in the separator of the second embodiment are the same as the specific aspect and the preferred aspect of the characteristics of the separator in the first embodiment.

The separator of the second embodiment preferably has a shrinkage ratio of MD of 30% or less, more preferably 20% or less, and still more preferably 15% or less when heat-treated at 150°C for 1 hour.

The separator of the second embodiment preferably has a shrinkage ratio of TD of 30% or less, more preferably 20% or less, and still more preferably 15% or less when heat-treated at 150°C for 1 hour.

The separator of the second embodiment preferably has an area shrinkage ratio of 50% or less, more preferably 40% or less, and still more preferably 30% or less when heat-treated at 150°C for 1 hour.

[Method of Manufacturing Separator of Second Embodiment]

The method of manufacturing a separator of the second embodiment is the same as the method of manufacturing a separator of the first embodiment, and a specific aspect and a preferred aspect are the same except for the following matters.

In the method of manufacturing a separator of the second embodiment, the viscosity of the coating liquid is preferably from 100 mPa·s to 2500 mPa s, and more preferably from 500 mPa·s to 2000 mPa s from the viewpoint of the coating suitability for the porous substrate. The viscosity (Pa s) of the coating liquid is a viscosity obtained by measuring a sample at a temperature of 20°C using a B-type rotational viscometer.

<Non-aqueous Secondary Battery of Second Embodiment>

The non-aqueous secondary battery of the second embodiment is synonymous with the non-aqueous secondary battery in the first embodiment. A specific form and a preferred form of a positive electrode, a negative electrode, an electrolytic solution, and an exterior material included in the non-aqueous secondary battery in the second embodiment are the same as the specific form and the preferred form of the positive electrode, the negative electrode, the electrolytic solution, and the exterior material included in the non-aqueous secondary battery in the first embodiment.

The non-aqueous secondary battery of the second embodiment can be manufactured, for example, by any one of the following (1) to (3) using a laminate after the laminate in which the separator of the second embodiment is disposed between the positive electrode and the negative electrode is manufactured. Hereinafter, performing the hot press treatment by impregnating the separator with the electrolytic solution is referred to as "wet heat press", and performing the hot press treatment without impregnating the separator with the electrolytic solution is referred to as "dry heat press."

(1) After the electrode and the separator are bonded to each other by hot press (dry heat press) on the laminate, the exterior member (for example, a pack made of an aluminum laminate film. Same as below), the electrolytic solution is injected into the container member, the inside of the container member is brought into a vacuum state, and then the laminate is further heat-pressed (wet heat press) from above the container member, thereby performing the bonding of the electrode and the separator, and the sealing of the container member.

(2) The laminate is housed in the exterior material, the electrolytic solution is injected into the exterior material, the inside of the exterior material is brought into the vacuum state, and then the laminate is heat-pressed (wet heat press) from above the exterior material, thereby performing the bonding of the electrode and the separator and the sealing of the exterior material.

(3) After the electrode and the separator are bonded to each other by the hot press (dry heat press) on the laminate, the laminate is housed in the exterior material, the electrolytic solution is injected into the exterior material, the inside of the exterior material is brought into the vacuum state, and then the exterior material is sealed.

As conditions for the hot press in the manufacturing methods (1) to (3), the press pressure is preferably 0.1 MPa to 15.0 MPa and the temperature is preferably 60°C to 100°C for each of the dry heat press and the wet heat press.

When the laminate in which the separator is disposed between the positive electrode and the negative electrode is manufactured, the method of disposing a separator between a positive electrode and a negative electrode may be a method of laminating at least one positive electrode, one separator, and one negative electrode in this order (so-called stack method), or may be a method of laminating a positive electrode, a separator, a negative electrode, and a separator in this order and winding the positive electrode, the separator, the negative electrode, and the separator in a length direction.

< Separator for Non-aqueous Secondary Battery of Third Embodiment>

A separator for a non-aqueous secondary battery of third embodiment (also simply referred to as "separator of third embodiment") of the disclosure includes a porous substrate and a heat-resistant porous layer provided on one side or on both sides of the porous substrate.

In the separator of the third embodiment, the heat-resistant porous layer contains a resin and inorganic particles; a content of the inorganic particles in the heat-resistant porous layer is from 50% by mass to 90% by mass; and the inorganic particles contain first inorganic particles that are metal hydroxide particles and second inorganic particles that are inorganic particles other than metal hydroxide particles.

In the separator of the third embodiment, the content of the inorganic particles in the heat-resistant porous layer is 50% by mass or more from the viewpoint of the heat resistance of the separator, and is 90% by mass or less from the viewpoint of the moldability of the heat-resistant porous layer, the viewpoint that the heat-resistant porous layer is less likely to be peeled off from the porous substrate, and the viewpoint that the heat-resistant porous layer has the excellent adhesiveness to the electrode.

In the separator of the third embodiment, the heat-resistant porous layer contains first inorganic particles that are metal hydroxide particles and second inorganic particles that are inorganic particles other than metal hydroxide particles. In order to obtain the flame retardant effect derived from the dehydration reaction of the metal hydroxide particles, some of the inorganic particles contained in the heat-resistant porous layer are the metal hydroxide particles. However, when all the inorganic particles are the metal hydroxide particles, water is excessively generated from the metal hydroxide particles under high temperature, and the water reacts with the electrolytic solution or the electrode to cause a further temperature rise, which may lead to smoking or ignition of the battery, so some of the inorganic particles are inorganic particles other than the metal hydroxide particles.

By the action of each of the configurations, the separator of the third embodiment is excellent in heat resistance that it is difficult to shrink under high temperature (for example, 150°C), and hardly causes the smoking or ignition even if the temperature in the battery abnormally rises, thereby increasing the safety of the battery.

Hereinafter, details of the porous substrate and the heat-resistant porous layer included in the separator of the third embodiment will be described.

[Porous substrate of Third Embodiment]

The porous substrate in the third embodiment is synonymous with the porous substrate in the second embodiment. A specific form and a preferred form of the porous substrate and the characteristics of the porous substrate in the third embodiment are the same as the specific form and the preferred form of the porous substrate and the characteristics of the porous substrate in the second embodiment.

[Heat-Resistant Porous substrate of Third Embodiment]

The heat-resistant porous layer of the third embodiment has a structure in which a large number of micropores are provided inside and the micropores are connected to each other, and is a layer in which a gas or a liquid can pass from one surface to the other surface.

The heat-resistant porous layer of the third embodiment is preferably provided as an outermost layer of the separator on one surface or both surfaces of the porous substrate, and is preferably a layer that adheres to the electrode when the separator and the electrode are stacked and pressed or hot-pressed.

The heat-resistant porous layer of the third embodiment may be provided on only one surface of the porous substrate or on both surfaces of the porous substrate. When the heat-resistant porous layer is present on both surfaces of the porous substrate, the bonding of the separator to both electrodes of the battery is good. In addition, curling is less likely to occur in the separator, and the handleability during the manufacturing of the battery is excellent. When the heat-resistant porous layer is present only on one surface of the porous substrate, ion permeability of the separator is more excellent. In addition, the thickness of the entire separator can be suppressed, and a battery having a higher energy density can be manufactured.

In the separator of the third embodiment, the heat-resistant porous layer contains a resin and inorganic particles, and the inorganic particles contain first inorganic particles that are metal hydroxide particles and second inorganic particles that are inorganic particles other than metal hydroxide particles. The heat-resistant porous layer may contain other components such as an organic filler.

[Resin of Third Embodiment]

The resin contained in the heat-resistant porous layer of the third embodiment is synonymous with the resin of the second embodiment, and the type and inclusion form of the non-limiting resin contained in the heat-resistant porous layer of the third embodiment are the same as the type and inclusion form of the resin of the second embodiment.

However, examples of the polyvinylidene fluoride type resin contained in the heat-resistant porous layer of the third embodiment include a homopolymer (that is, polyvinylidene fluoride) of vinylidene fluoride; a copolymer of vinylidene fluoride and halogen-containing monomers such as hexafluoropropylene, tetrafluoroethylene, trifluoroethylene, chlorotrifluoroethylene, vinyl fluoride, and trichloroethylene; and mixtures thereof. The polyvinylidene fluoride type resin may be used singly, or may be used in combination of two or more thereof.

[Inorganic Particle of Third Embodiment]

In the separator of the third embodiment, the content of the inorganic particles in the heat-resistant porous layer is 50% by mass or more, more preferably 55% by mass or more, and still more preferably 60% by mass or more from the viewpoint of the heat resistance of the separator.

In the separator of the third embodiment, the content of the inorganic particles in the heat-resistant porous layer is 90% by mass or less, more preferably 85% by mass or less, and still more preferably 80% by mass or less from the viewpoint of the moldability of the heat-resistant porous layer, the viewpoint that the heat-resistant porous layer is less likely to be peeled off from the porous substrate, and the viewpoint that the heat-resistant porous layer is excellent in adhesiveness to the electrode.

A particle shape and a preferred aspect of the inorganic particles of the third embodiment are the same as the particle shape and the preferred aspect of the inorganic particles of the second embodiment.

A specific aspect and a preferred aspect of the method of determining an average primary particle size of inorganic particles of the third embodiment are the same as the specific aspect and the preferred aspect of the method of determining an average primary particle size of inorganic particles of the second embodiment.

- First Inorganic Particle (Metal Hydroxide Particle) of Third Embodiment -

The first inorganic particles of the third embodiment are metal hydroxide particles. Examples of the metal hydroxide particles include particles of magnesium hydroxide, aluminum hydroxide, calcium hydroxide, chromium hydroxide, zirconium hydroxide, cerium hydroxide, and nickel hydroxide. The metal hydroxide particles may be used singly or in combination of two or more kinds thereof.

The first inorganic particles of the third embodiment preferably have an average primary particle size of from 0.4 μm to 2.0 μm.

The average primary particle size of the first inorganic particles of the third embodiment is preferably 0.4 μm or more, more preferably 0.5 μm or more, and still more preferably 0.6 μm or more from the viewpoint of suppressing an excessive dehydration reaction.

The average primary particle size of the first inorganic particles of the third embodiment is preferably 2.0 μm or less, more preferably 1.5 μm or less, and still more preferably 1.0 μm or less from the viewpoint of increasing the surface area (specific surface area) of the inorganic particles per unit volume and densely filling the inorganic particles to suppress the thermal shrinkage of the heat-resistant porous layer.

In the first inorganic particles of the third embodiment, two or more kinds of metal hydroxide particles having different average primary particle sizes may be used in combination, and each average primary particle size is preferably in the above range.

- Second Inorganic Particle of Third Embodiment (Inorganic Particle Other Than Metal Hydroxide Particle) -

The second inorganic particles of the third embodiment are inorganic particles other than the metal hydroxide particles. Examples of the second inorganic particles include metal oxide particles, metal sulfate particles, metal carbonate particles, metal nitride particles, metal fluoride particles, and clay mineral particles. The second inorganic particles may be used singly or in combination of two or more kinds thereof. The second inorganic particles are preferably the metal oxide particles from the viewpoint of being stable in an electrolytic solution.

Examples of the metal oxide particles include particles of magnesium oxide, alumina ($Al_2O_3$), boehmite (alumina monohydrate), titania ($TiO_2$), silica ($SiO_2$), zirconia ($ZrO_2$), barium titanate ($BaTiO_3$), and zinc oxide.

Examples of the metal sulfate particles include particles of barium sulfate, strontium sulfate, calcium sulfate, calcium sulfate dihydrate, alunite, and jarosite. Examples of the metal carbonate particles include particles of magnesium carbonate, and calcium carbonate. Examples of the metal nitride particles include particles of magnesium nitride, aluminum nitride, calcium nitride, and titanium nitride. Examples of the metal fluoride particles include particles of magnesium fluoride and calcium fluoride. Examples of the clay mineral particles include particles of calcium silicate, calcium phosphate, apatite, and talc.

The second inorganic particles of the third embodiment preferably have an average primary particle size of from 0.01 μm to 0.3 μm.

The average primary particle size of the second inorganic particles of the third embodiment is preferably 0.3 μm or less, more preferably 0.2 μm or less, and still more preferably 0.1 μm or less from the viewpoint of increasing the surface area (specific surface area) of the inorganic particles per unit volume and densely filling the inorganic particles to suppress the thermal shrinkage of the heat-resistant porous layer.

The average primary particle size of the second inorganic particles of the third embodiment is preferably 0.01 μm or more, more preferably 0.03 μm or more, and still more preferably 0.05 μm or more from the viewpoint of the actual size of the inorganic particles and ease of handling.

As the second inorganic particles of the third embodiment, two or more kinds of inorganic particles having different average primary particle sizes may be used in combination, and each average primary particle size is preferably in the above range.

In the third embodiment, a ratio of the average primary particle size of the first inorganic particles /the average primary particle size of the second inorganic particles is preferably more than 1 and 200 or less, more preferably more than 3 and 100 or less, and still more preferably more than 5 and 50 or less.

In the third embodiment, the mass ratio of the first inorganic particles and the second inorganic particles (first inorganic particles : second inorganic particles) contained in the heat-resistant porous layer is preferably from 90:10 to 10:90, more preferably from 60:40 to 15:85, and still more preferably from 55:45 to 20:80 from the viewpoint of the balance of the flame retardant effect by the metal hydroxide particles.

- Organic Filler of Third Embodiment -

The organic filler of the third embodiment is synonymous with the organic filler of the second embodiment. A specific form and a preferred form of the organic filler in the third embodiment are the same as the specific form and the preferred form of the organic filler in the second embodiment.

- Other Components of Third Embodiment -

Other components in the heat-resistant porous layer of the separator of the third embodiment are synonymous with the other components in the second embodiment. A specific form and a preferred form of the other components in the third embodiment are the same as the specific form and the preferred form of the other components in the second embodiment.

[Characteristics of Heat-Resistant Porous Layer of Third Embodiment]

A specific aspect and a preferred aspect of the characteristics of the heat-resistant porous layer of the third embodiment are the same as the specific aspect and the preferred aspect of the characteristics of the heat-resistant porous layer in the second embodiment.

[Characteristics of Separator of Third Embodiment]

A specific aspect and a preferred aspect of the characteristics of the separator of the third embodiment are the same as the specific aspect and the preferred aspect of the characteristics of the separator in the second embodiment.

[Method of Manufacturing Separator of Third Embodiment]

A method of manufacturing a separator of the second embodiment is the same as the method of manufacturing a separator of the first embodiment, and a specific aspect and a preferred aspect are also the same.

<Non-aqueous Secondary Battery of Third Embodiment>

The non-aqueous secondary battery of the third embodiment is synonymous with the non-aqueous secondary battery in the second embodiment. A specific form and a preferred form of a positive electrode, a negative electrode, an electrolytic solution, and an exterior material included in the non-aqueous secondary battery in the third embodiment are the same as the specific form and the preferred form of the positive electrode, the negative electrode, the electrolytic solution, and the exterior material included in the non-aqueous secondary battery in the second embodiment.
The method of manufacturing a non-aqueous secondary battery of the third embodiment and the preferred aspect thereof are the same as the method of manufacturing a non-aqueous secondary battery in the second embodiment and the preferred aspect thereof.

EXAMPLES

Hereinafter, the separator and the non-aqueous secondary battery of the disclosure will be described more specifically with reference to Examples. Materials, used amounts, ratios, treatment procedures, and the like illustrated in the following Examples can be changed, if appropriate without departing from the spirit of the disclosure. Therefore, the range of the separator and the non-aqueous secondary battery of the disclosure should not be construed as being limited by the specific examples described below.

<Measurement Method and Evaluation Method>

The measurement methods and evaluation methods applied in the examples of the invention and comparative examples are as follows.

[Thickness of Porous Substrate and Separator]

The thicknesses ($\mu$m) of the porous substrate and the separator were determined by measuring 20 points within a 10 cm square using a contact type thickness meter (Mitutoyo Corporation, LITEMATIC VL-50-B) and averaging the measured values. The measurement terminal used was a spherical surface terminal with a radius of the sphere of 10 mm (Mitutoyo Corporation, measurement terminal with carbide spherical surface, $\varphi$ 10.5), and was adjusted so that a load of 0.2 N was applied during the measurement.

[Thickness of Heat-resistant porous layer]

The thickness ($\mu$m) of the heat-resistant porous layer was determined by subtracting the thickness ($\mu$m) of the porous substrate from the thickness ($\mu$m) of the separator, and bisecting the obtained value to evaluate the one-side thickness.

[Porosity of Porous Substrate]

The porosity $\varepsilon$ (%) of the porous substrate was determined by the following formula.

$$\varepsilon = \{1 - Ws/(ds \cdot t)\} \times 100$$

In the formula, Ws represents basis weight of porous substrate (g/m$^2$), ds represents true density of porous substrate (g/cm$^3$), and t represents thickness of porous substrate ($\mu$m).

[Porosity of Heat-resistant porous layer]

The porosity ε (%) of the heat-resistant porous layer was determined by the following formula.

$$\varepsilon = \{1 - (Wa/da + Wb/db + Wc/dc + ... + Wn/dn)/t\} \times 100$$

Here, the constituent materials of the heat-resistant porous layer are represented by a, b, c,..., n, the mass per unit area of each constituent material is Wa, Wb, Wc,..., or Wn (g/cm$^2$), the true density of each constituent material is represented by da, db, dc,..., or dn (g/cm$^3$), and the thickness of the heat-resistant porous layer is represented by t (cm).

[Weight average Molecular Weight of Polyvinylidene Fluoride type Resin]

The weight average molecular weight (Mw) of the polyvinylidene fluoride type resin was measured by gel permeation chromatography (GPC). The molecular weight was measured by GPC using a GPC device "GPC-900" manufactured by JASCO Corporation, using two columns of TSKgel SUPER AWM-H manufactured by Tosoh Corporation, using N, N-dimethylformamide for a solvent, under conditions that temperature was 40°C and a flow rate was 0.6 mL/min to obtain a molecular weight in terms of polystyrene.

[HFP Content of Polyvinylidene Fluoride type Resin]

20 mg of polyvinylidene fluoride type resin was dissolved in 0.6 mL of heavy dimethyl sulfoxide at 100°C, and a $^{19}$F-NMR spectrum was measured at 100°C. The HFP content (% by mole) of the polyvinylidene fluoride type resin was obtained from the obtained NMR spectrum.

[Average Primary Particle Size of Inorganic Particles]

The inorganic particles before being added to the coating liquid for forming the heat-resistant porous layer was used as a sample.
The average primary particle size of the inorganic particles was determined by measuring the major diameters of 100 inorganic particles randomly selected in observation with a scanning electron microscope (SEM), and averaging the major diameters of 100 inorganic particles.

[Gurley Value]

The Gurley value (sec/100 mL) of each of the porous substrate and the separator was measured with a Gurley type densometer (manufactured by Toyo Seiki Seisaku-sho, Ltd.) in accordance with JIS P8117 (2009).
A value obtained by subtracting a Gurley value (sec/100 mL) of the porous substrate from the Gurley value (sec/100 mL) of the separator was described as "ΔGurley value" in Table 1.

[Area Shrinkage Ratio]

The separator was cut out into a rectangle of 180 mm in an MD direction × 60 mm in a TD direction to prepare a test piece. This test piece was marked at points of 20 mm and 170 mm from one end on a line bisecting the test piece in the TD direction (referred to as points A and B, respectively). Furthermore, the test piece was marked at points of 10 mm and 50 mm from one end on a line bisecting the test piece in the MD direction (referred to as points C and D, respectively). A clip was attached to the marked test piece (a point where the clip was attached is between the point A and an end closest to the point A). The test piece was hung in an oven in which the temperature is adjusted to 135°C or 150°C to be heated under no tension for one hour. A length between A and B and a length between C and D were measured before and after the heat treatment, and an area shrinkage ratio (%) was calculated by the following formula. Furthermore, the area shrinkage ratios (%) of the ten test pieces were averaged.

$$\text{Area shrinkage ratio (\%)} = \{1 - (\text{length between A and B after heat treatment} \div \text{length between A and B before heat treatment}) \times (\text{length between C and D after heat treatment} \div \text{length between C and D before heat treatment})\} \times 100$$

[Adhesiveness to Negative Electrode]

300 g of artificial graphite as a negative electrode active material, 7.5 g of a watersoluble dispersion containing 40% by mass of a modified product of a styrene-butadiene copolymer as a binder, 3 g of carboxymethyl cellulose as a thickener, and an appropriate amount of water were stirred and mixed by a double arm mixer to prepare a negative electrode slurry. The negative electrode slurry was applied to one side of a copper foil having a thickness of 10 $\mu$m, dried, and then pressed to obtain a negative electrode having a negative electrode active material layer.

The negative electrode obtained above was cut into a width of 25 mm and a length of 70 mm, and the separator was cut into a rectangle of 28 mm in a TD direction $\times$ 75 mm in an MD direction. A release paper having a width of 25 mm and a length of 70 mm was prepared. The laminated body in which the negative electrode, the separator, and the release paper were stacked in this order was inserted into a pack made of an aluminum laminate film, and was hot-pressed together with the pack in the stacking direction of the laminated body using a hot pressing machine, thereby bonding the negative electrode and the separator. The conditions for the hot pressing were a temperature of 90°C, a pressure of 9 MPa, and a time of 10 seconds. Thereafter, the laminated body was taken out from the pack, and the release paper was peeled off to obtain a test piece.

The non-coated surface of the negative electrode of the test piece was fixed to a metal plate with a double-sided tape, and the metal plate was fixed to a lower chuck of Tensilon (A & D Company, STB-1225S). In this case, the metal plate was fixed to the Tensilon such that the length direction of the test piece (that is, the MD direction of the separator) was the gravity direction. The separator was peeled off from the negative electrode by about 2 cm from the lower end, the end portion thereof was fixed to the upper chuck, and a 180° peeling test was performed. The tensile speed in the 180° peel test was set to 300 mm/min, a load (N) from 10 mm to 40 mm after the start of the measurement was taken at 0.4 mm intervals, and the average thereof was calculated. Further, a load of 10 test pieces was averaged to determine the adhesive strength (N/25 mm) between the negative electrode and the separator.

[Viscosity of Coating Liquid]

The viscosity (Pa·s) of the coating liquid was measured using a B-type rotational viscometer (Brookfield, product number RVDV + I, spindle: SC4-18). A sample was collected from a coating liquid homogenized by stirring, and measured under conditions of a sample amount of 7 mL, a sample temperature of 20°C, and a spindle rotation speed of 10 rotations/min.

The viscosity of the coating liquid immediately after preparation is represented by a percentage of viscosity of each of other Examples and Comparative Examples with respect to Example 1, with Example 1 as a reference value.

The prepared coating liquid was allowed to stand in a thermostatic chamber at a temperature of 25°C for 24 hours. The sample after 24 hours was stirred and homogenized, the sample was collected, and the viscosity was measured by the above method. In each of Examples and Comparative Examples, a viscosity increase rate (%) was calculated by the following calculation formula.

$$\text{Viscosity increase rate (\%)} = (\text{viscosity after 24 hours - viscosity immediately after preparation}) \div \text{viscosity immediately after preparation} \times 100$$

[Safety Test of Secondary Battery]

89.5 parts by mass of lithium cobalt oxide, 4.5 parts by mass of acetylene black (manufactured by Denka Company Limited.), 6 parts by mass of polyvinylidene fluoride (manufactured by KUREHA CORPORATION), and N-methyl -2 pyrrolidone were kneaded, as a result of which a slurry was prepared. The slurry was applied onto an aluminum foil having a thickness of 20 $\mu$m, dried, and pressed, as a result of which a positive electrode having a thickness of 100 $\mu$m was obtained.

87 parts by mass of mesophase carbon microbeads (manufactured by Osaka Gas Chemicals Co., Ltd.), 3 parts by mass of acetylene black (manufactured by Denka Company Limited.), 10 parts by mass of polyvinylidene fluoride (manufactured by KUREHA CORPORATION), and N-methyl-2 pyrrolidone were kneaded, as a result of which a slurry was prepared. The slurry was applied onto a copper foil having a thickness of 18 $\mu$m, dried, and pressed, as a result of which a negative electrode having a thickness of 90 $\mu$m was obtained.

A laminate in which a separator was disposed between a positive electrode and a negative electrode was manufactured. The laminate was impregnated with an electrolytic solution and sealed in an exterior material of an aluminum laminate film, as a result of which a secondary battery was manufactured. As the electrolytic solution, 1 mol/L LiPF$_6$-ethylene carbonate : ethyl methyl carbonate (mass ratio 3:7) was used. This secondary battery had a positive electrode area of 2 cm$^2$ × 1.4 cm$^2$, a negative electrode area of 2.2 cm$^2$ × 1.6 cm$^2$, and a set capacity of 8 mAh (in the range of from 4.2 V to 2.75 V).

The secondary battery was charged to 4.2 V at 0.2 C for 12 hours to be in a fully charged state. An iron nail having a diameter of 2.5 mm penetrated through the center of the charged battery, and as a result, ignition and smoking were observed. 100 secondary batteries were tested and classified as follows.

A: The number of batteries in which the ignition is confirmed is 0, and the number of batteries in which the smoking is confirmed is 0.

B: The number of batteries in which the ignition is confirmed is 0, and the number of batteries in which the smoking is confirmed is 1 or 2.

C: The number of batteries in which the ignition is confirmed is 0, and the number of batteries in which the smoking is confirmed is 3 or more.

D: The number of batteries in which the ignition is confirmed is 1 or more.

<First embodiment: Manufacturing of Separator of Embodiment A>

[Example 1]

As the material of the heat-resistant porous layer, a VDF-HFP copolymer, barium sulfate particles, and magnesium hydroxide particles were prepared. These physical properties are as shown in Table 1.

The VDF-HFP copolymer was dissolved in dimethylacetamide (DMAc), and the barium sulfate particles and the magnesium hydroxide particles were further dispersed, thereby obtaining a coating liquid 1. In the coating liquid 1, the concentration of the VDF-HFP copolymer was 7.5% by mass, the mass ratio (VDF-HFP copolymer : inorganic particles) of the VDF-HFP copolymer and the inorganic particles was 40:60, and the mass ratio (barium sulfate particles : magnesium hydroxide particles) of the barium sulfate particles and the magnesium hydroxide particles was 75:25.

The coating liquid 1 was applied to both surfaces of a polyethylene microporous film (thickness 7 $\mu$m, porosity 36% and Gurley value 120 sec/100 mL). At that time, coating was performed such that the coating amounts on the front and back surfaces were equal. This was immersed in a coagulation liquid (water : DMAc = 70:30 [mass ratio], liquid temperature: 40°C) to solidify the coating layer, and then, the coating layer was washed with water and dried. In this way, the separator in which the heat-resistant porous layer was formed on both surfaces of the polyethylene microporous film was obtained. The thickness of the heat-resistant porous layer was 3 $\mu$m on one side.

[Examples 2 to 15 and Comparative Examples 1 to 10]

Each separator was manufactured in the same manner as in Example 1 except that the material and composition of the heat-resistant porous layer were set to the specifications shown in Table 1. In Comparative Example 1, meta-wholly aromatic polyamide (polymetaphenylene isophthalamide, "CONEX" (registered trademark) manufactured by TEIJIN CORPORATION) was used as a resin.

The composition, physical properties, and evaluation results of each separator of Examples 1 to 15 and Comparative Examples 1 to 10 are shown in Table 1.

[Table 1]

| | Heat-resistant porous layer | | | | | | | | | | | Δ Gurley value | Area shrinkage ratio (150°C) | | Adhesion to negative electrode |
| | Resin | | | First inorganic particle | | Second inorganic particle | | First: Second | Content of inorganic particle | Thickness (one side) | Porosity | | | | |
| | Kind | HFP amount | Mw | Kind | Particle size | Kind | Particle size | Mass ratio | | | | | 135°C | 150°C | |
| | - | % by mole | 10,000 | - | μm | - | μm | - | % by mass | μm | % | sec/ 100mL | % | % | N/25 mm |
| Comparative Example 1 | Aramid (Conex) | | | BaSO$_4$ | 0.05 | Mg (OH)$_2$ | 0.8 | 75:25 | 60 | 3 | 42 | 50 | 6 | 10 | 0.01 |
| Comparative Example 2 | PVDF | 0 | 34 | BaSO$_4$ | 0.05 | Mg (OH)$_2$ | 0.8 | 75:25 | 60 | 3 | 39 | 120 | 19 | 25 | 0.02 |
| Example 1 | VDF-HFP | 7.0 | 34 | BaSO$_4$ | 0.05 | Mg (OH)$_2$ | 0.8 | 75:25 | 60 | 3 | 45 | 110 | 20 | 27 | 1.0 |
| Comparative Example 3 | VDF-HFP | 7.0 | 5 | BaSO$_4$ | 0.02 | Mg (OH)$_2$ | 0.5 | 50:50 | 75 | 3 | 46 | 70 | 42 | 70 | 0.8 |
| Example 2 | VDF-HFP | 7.0 | 10 | BaSO$_4$ | 0.02 | Mg (OH)$_2$ | 0.5 | 50:50 | 75 | 3 | 40 | 40 | 32 | 45 | 1.1 |
| Example 3 | VDF-HFP | 7.0 | 34 | BaSO$_4$ | 0.02 | Mg (OH)$_2$ | 0.5 | 50:50 | 75 | 3 | 42 | 170 | 17 | 24 | 0.7 |
| Example 4 | VDF-HFP | 7.0 | 55 | BaSO$_4$ | 0.02 | Mg (OH)$_2$ | 0.5 | 50:50 | 75 | 3 | 35 | 280 | 16 | 23 | 0.5 |
| Comparative Example 4 | VDF-HFP | 7.0 | 65 | BaSO$_4$ | 0.02 | Mg (OH)$_2$ | 0.5 | 50:50 | 75 | 3 | 38 | 310 | 12 | 20 | 0.02 |
| Comparative Example 5 | VDF-HFP | 7.0 | 34 | BaSO$_4$ | 0.2 | Mg (OH)$_2$ | 0.2 | 75:25 | 75 | 3 | 42 | 290 | 12 | 18 | 0.03 |
| Example 5 | VDF-HFP | 7.0 | 34 | BaSO$_4$ | 0.3 | Mg (OH)$_2$ | 0.4 | 75:25 | 75 | 3 | 46 | 180 | 20 | 32 | 0.3 |
| Example 6 | VDF-HFP | 7.0 | 34 | BaSO$_4$ | 0.3 | Mg (OH)$_2$ | 0.5 | 75:25 | 75 | 3 | 48 | 150 | 22 | 38 | 0.9 |
| Example 7 | VDF-HFP | 7.0 | 34 | BaSO$_4$ | 0.3 | Mg (OH)$_2$ | 1.5 | 75:25 | 75 | 3 | 49 | 120 | 30 | 42 | 1.1 |

(continued)

| | Resin | | | First inorganic particle | | Second inorganic particle | | First:Second Mass ratio | Content of inorganic particle | Thickness (one side) | Porosity | Δ Gurley value | Area shrinkage ratio (150°C) | | Adhesion to negative electrode |
|---|---|---|---|---|---|---|---|---|---|---|---|---|---|---|---|
| | Kind | HFP amount | Mw | Kind | Particle size | Kind | Particle size | Mass ratio | | | | | 135°C | 150°C | |
| | - | % by mole | 10,000 | - | μm | - | μm | - | % by mass | μm | % | sec/100mL | % | % | N/25 mm |
| Comparative Example 6 | VDF-HFP | 7.0 | 34 | BaSO₄ | 0.4 | Mg(OH)₂ | 0.5 | 75:25 | 75 | 3 | 52 | 90 | 45 | 78 | 1.2 |
| Comparative Example 7 | VDF-HFP | 7.0 | 34 | BaSO₄ | 0.05 | - | - | 100:0 | 75 | 1 | 20 | 160 | 13 | 23 | 0.01 |
| Example 8 | VDF-HFP | 7.0 | 34 | BaSO₄ | 0.05 | Mg(OH)₂ | 0.8 | 90:10 | 75 | 1 | 28 | 130 | 18 | 27 | 0.4 |
| Example 9 | VDF-HFP | 7.0 | 34 | BaSO₄ | 0.05 | Mg(OH)₂ | 0.8 | 80:20 | 75 | 1 | 31 | 120 | 22 | 28 | 0.7 |
| Example 10 | VDF-HFP | 7.0 | 34 | BaSO₄ | 0.05 | Mg(OH)₂ | 0.8 | 40:60 | 75 | 1 | 36 | 90 | 25 | 34 | 0.8 |
| Example 11 | VDF-HFP | 7.0 | 34 | BaSO₄ | 0.05 | Mg(OH)₂ | 0.8 | 10:90 | 75 | 1 | 49 | 70 | 32 | 47 | 1.1 |
| Comparative Example 8 | VDF-HFP | 7.0 | 34 | - | - | Mg(OH)₂ | 0.8 | 0:100 | 75 | 1 | 56 | 60 | 44 | 76 | 1.3 |
| Comparative Example 9 | VDF-HFP | 7.0 | 34 | BaSO₄ | 0.2 | Mg(OH)₂ | 0.8 | 75:25 | 45 | 8 | 60 | 100 | 49 | 82 | 1.7 |
| Example 12 | VDF-HFP | 7.0 | 34 | BaSO₄ | 0.2 | Mg(OH)₂ | 0.8 | 75:25 | 50 | 8 | 53 | 150 | 33 | 47 | 1.5 |
| Example 13 | VDF-HFP | 7.0 | 34 | BaSO₄ | 0.2 | Mg(OH)₂ | 0.8 | 75:25 | 60 | 8 | 46 | 240 | 26 | 38 | 1.2 |
| Example 14 | VDF-HFP | 7.0 | 34 | BaSO₄ | 0.2 | Mg(OH)₂ | 0.8 | 75:25 | 80 | 8 | 35 | 350 | 14 | 21 | 0.8 |
| Example 15 | VDF-HFP | 7.0 | 34 | BaSO₄ | 0.2 | Mg(OH)₂ | 0.8 | 75:25 | 90 | 8 | 32 | 400 | 10 | 14 | 0.6 |

Heat-resistant porous layer

(continued)

| | Heat-resistant porous layer | | | | | | | | | | | Δ Gurley value | Area shrinkage ratio (150°C) | | Adhesion to negative electrode |
|---|---|---|---|---|---|---|---|---|---|---|---|---|---|---|---|
| | Resin | | | First inorganic particle | | Second inorganic particle | | First: Second | Content of inorganic particle | Thickness (one side) | Porosity | | | | |
| | Kind | HFP amount | Mw | Kind | Particle size | Kind | Particle size | Mass ratio | | | | | 135°C | 150°C | |
| | - | % by mole | 10,000 | - | μm | - | μm | - | % by mass | μm | % | sec/ 100mL | % | % | N/25 mm |
| Comparative Example 10 | VDF-HFP | 7.0 | 34 | BaSO$_4$ | 0.2 | Mg(OH)$_2$ | 0.8 | 75:25 | 95 | 8 | 30 | 420 | 7 | 12 | 0.01 |

<First embodiment: Manufacturing of Separator of Embodiment B>

[Example 101]

Polyvinylidene fluoride (PVDF), polymethyl methacrylate (PMMA), barium sulfate particles, and magnesium hydroxide particles were prepared as the material of the heat-resistant porous layer. These physical properties are as shown in Table 2.

The PVDF and PMMA were dissolved in dimethylacetamide (DMAc), and the barium sulfate particles and the magnesium hydroxide particles were further dispersed, thereby obtaining a coating liquid 2. The coating liquid 2 had a resin concentration of 5% by mass, a mass ratio (resin : inorganic particles) of the resin and the inorganic particles of 25:75, a mass ratio (PVDF : PMMA) of PVDF and PMMA of 80:20, and a mass ratio (barium sulfate particles : magnesium hydroxide particles) of barium sulfate particles and magnesium hydroxide particles of 80:20.

The coating liquid 2 was applied to both surfaces of a polyethylene microporous film (thickness 7 $\mu$m, porosity 36% and Gurley value 120 sec/100 mL). At that time, coating was performed such that the coating amounts on the front and back surfaces were equal. This was immersed in a coagulation liquid (water : DMAc = 70:30 [mass ratio], liquid temperature: 40°C) to solidify the coating layer, and then, the coating layer was washed with water and dried. In this way, the separator in which the heat-resistant porous layer was formed on both surfaces of the polyethylene microporous film was obtained. The thickness of the heat-resistant porous layer was 3 $\mu$m on one side.

[Examples 102 to 120 and Comparative Examples 101 to 108]

Each separator was manufactured in the same manner as in Example 101 except that the material and composition of the heat-resistant porous layer were set to the specifications shown in Table 2.

The composition, physical properties, and evaluation results of each separator of Examples 101 to 120 and Comparative Examples 101 to 108 are shown in Table 1.

[Table 2]

| | Mw of PVDF (10,000) | PVDF:PMMA Mass ratio | First inorganic particle Kind | First inorganic particle Particle size (μm) | Second inorganic particle Kind | Second inorganic particle Particle size (μm) | First:Second Mass ratio | Content of inorganic particle (% by mass) | Thickness (one side) (μm) | Porosity (%) | Δ Gurley value (sec/100 mL) | Area shrinkage ratio (150°C) (%) | Adhesion to negative electrode (N/25 mm) |
|---|---|---|---|---|---|---|---|---|---|---|---|---|---|
| Comparative Example 101 | 101 | 45:55 | BaSO$_4$ | 0.05 | Mg(OH)$_2$ | 0.8 | 80:20 | 75 | 3 | 57 | 30 | 73 | 1.8 |
| Example 102 | 101 | 50:50 | BaSO$_4$ | 0.05 | Mg(OH)$_2$ | 0.8 | 80:20 | 75 | 3 | 56 | 110 | 45 | 1.7 |
| Example 103 | 101 | 65:35 | BaSO$_4$ | 0.05 | Mg(OH)$_2$ | 0.8 | 80:20 | 75 | 3 | 52 | 115 | 35 | 1.5 |
| Example 101 | 101 | 80:20 | BaSO$_4$ | 0.05 | Mg(OH)$_2$ | 0.8 | 80:20 | 75 | 3 | 50 | 120 | 26 | 1.2 |
| Example 104 | 101 | 90:10 | BaSO$_4$ | 0.05 | Mg(OH)$_2$ | 0.8 | 80:20 | 75 | 3 | 42 | 150 | 21 | 0.5 |
| Comparative Example 102 | 101 | 100:0 | BaSO$_4$ | 0.05 | Mg(OH)$_2$ | 0.8 | 80:20 | 75 | 3 | 36 | 180 | 23 | 0.01 |
| Example 105 | 101 | 80:20 | BaSO$_4$ | 0.01 | Mg(OH)$_2$ | 0.8 | 80:20 | 75 | 3 | 27 | 220 | 19 | 0.6 |
| Example 106 | 101 | 80:20 | BaSO$_4$ | 0.3 | Mg(OH)$_2$ | 0.8 | 80:20 | 75 | 3 | 45 | 110 | 46 | 1.4 |
| Example 107 | 101 | 80:20 | BaSO$_4$ | 0.3 | Mg(OH)$_2$ | 0.4 | 80:20 | 75 | 3 | 38 | 175 | 42 | 0.5 |
| Comparative Example 103 | 101 | 80:20 | BaSO$_4$ | 0.3 | Mg(OH)$_2$ | 0.3 | 80:20 | 75 | 3 | 35 | 195 | 41 | 0.08 |
| Comparative Example 104 | 101 | 80:20 | BaSO$_4$ | 0.4 | Mg(OH)$_2$ | 0.8 | 80:20 | 75 | 3 | 48 | 40 | 79 | 1.6 |
| Comparative Example 105 | 101 | 80:20 | BaSO$_4$ | 0.05 | - | - | 100:0 | 75 | 8 | 29 | 540 | 21 | 0.04 |

Heat-resistant porous layer

(continued)

| | Heat-resistant porous layer | | | | | | | | | | Δ Gurley value | Area shrinkage ratio (150°C) | Adhesion to negative electrode |
|---|---|---|---|---|---|---|---|---|---|---|---|---|---|
| | Mw of PVDF | PVDF:PMMA | First inorganic particle | | Second inorganic particle | | First:Second | Content of inorganic particle | Thickness (one side) | Porosity | | | |
| | | Mass ratio | Kind | Particle size | Kind | Particle size | Mass ratio | | | | | | |
| | 10,000 | - | - | $\mu$m | - | $\mu$m | - | % by mass | $\mu$m | % | sec/100 mL | % | N/25 mm |
| Example 108 | 101 | 80:20 | BaSO$_4$ | 0.05 | Mg(OH)$_2$ | 0.8 | 95:5 | 75 | 8 | 33 | 500 | 23 | 0.3 |
| Example 109 | 101 | 80:20 | BaSO$_4$ | 0.05 | Mg(OH)$_2$ | 0.8 | 90:10 | 75 | 8 | 39 | 380 | 30 | 0.8 |
| Example 110 | 101 | 80:20 | BaSO$_4$ | 0.05 | Mg(OH)$_2$ | 0.8 | 50:50 | 75 | 8 | 43 | 325 | 36 | 1.0 |
| Example 111 | 101 | 80:20 | BaSO$_4$ | 0.05 | Mg(OH)$_2$ | 0.8 | 10:90 | 75 | 8 | 52 | 210 | 48 | 1.3 |
| Comparative Example 106 | 101 | 80:20 | - | - | Mg(OH)$_2$ | 0.8 | 0:100 | 75 | 8 | 58 | 145 | 71 | 1.5 |
| Comparative Example 107 | 143 | 80:20 | BaSO$_4$ | 0.1 | Al(OH)$_3$ | 2.0 | 50:50 | 45 | 1 | 58 | 30 | 69 | 2.1 |
| Example 112 | 143 | 80:20 | BaSO$_4$ | 0.1 | Al(OH)$_3$ | 2.0 | 50:50 | 50 | 1 | 53 | 50 | 43 | 1.9 |
| Example 113 | 143 | 80:20 | BaSO$_4$ | 0.1 | Al(OH)$_3$ | 2.0 | 50:50 | 60 | 1 | 50 | 75 | 34 | 1.2 |
| Example 114 | 143 | 80:20 | BaSO$_4$ | 0.1 | Al(OH)$_3$ | 2.0 | 50:50 | 80 | 1 | 47 | 90 | 31 | 0.9 |
| Example 115 | 143 | 80:20 | BaSO$_4$ | 0.1 | Al(OH)$_3$ | 2.0 | 50:50 | 90 | 1 | 41 | 100 | 25 | 0.5 |
| Comparative Example 108 | 143 | 80:20 | BaSO$_4$ | 0.1 | Al(OH)$_3$ | 2.0 | 50:50 | 95 | 1 | 39 | 120 | 19 | 0.02 |
| Example 116 | 50 | 80:20 | BaSO$_4$ | 0.05 | Mg(OH)$_2$ | 0.8 | 75:25 | 75 | 4 | 55 | 125 | 43 | 1.3 |

(continued)

| | Heat-resistant porous layer | | | | | | | | | | | | | Δ Gurley value | Area shrinkage ratio (150°C) | Adhesion to negative electrode |
|---|---|---|---|---|---|---|---|---|---|---|---|---|---|---|---|---|
| | Mw of PVDF | PVDF: PMMA | First inorganic particle | | Second inorganic particle | | First: Second | Content of inorganic particle | Thickness (one side) | Porosity | | | | | | |
| | | Mass ratio | Kind | Particle size | Kind | Particle size | Mass ratio | | | | | | | | | |
| | 10,000 | - | - | μm | - | μm | - | % by mass | μm | % | | | | sec/ 100 mL | % | N/25 mm |
| Example 117 | 60 | 80:20 | BaSO$_4$ | 0.05 | Mg(OH)$_2$ | 0.8 | 75:25 | 75 | 4 | 52 | | | | 140 | 36 | 1.0 |
| Example 118 | 120 | 80:20 | BaSO$_4$ | 0.05 | Mg(OH)$_2$ | 0.8 | 75:25 | 75 | 4 | 43 | | | | 160 | 32 | 0.9 |
| Example 119 | 180 | 80:20 | BaSO$_4$ | 0.05 | Mg(OH)$_2$ | 0.8 | 75:25 | 75 | 4 | 40 | | | | 185 | 27 | 0.7 |
| Example 120 | 210 | 80:20 | BaSO$_4$ | 0.05 | Mg(OH)$_2$ | 0.8 | 75:25 | 75 | 4 | 38 | | | | 210 | 23 | 0.5 |

<Manufacturing of Separator of Second embodiment>

[Example 201]

As the material of the heat-resistant porous layer, a copolymer of vinylidene fluoride and hexafluoropropylene (VDF-HFP copolymer. The present copolymer is a polyvinylidene fluoride type resin having no carboxy group and no ester bond.), barium sulfate particles, and magnesium hydroxide particles were prepared. Physical properties of the barium sulfate particles and the magnesium hydroxide particles are as shown in Table 1.

The VDF-HFP copolymer was dissolved in dimethylacetamide (DMAc), and the barium sulfate particles and the magnesium hydroxide particles were further dispersed, thereby obtaining a coating liquid 3. In the coating liquid 3, the concentration of the VDF-HFP copolymer was 5% by mass, the mass ratio (VDF-HFP copolymer : inorganic particles) of the VDF-HFP copolymer and the inorganic particles was 20:80, and the mass ratio (barium sulfate particles : magnesium hydroxide particles) of the barium sulfate particles and the magnesium hydroxide particles was 70:30.

The coating liquid 3 was applied to both surfaces of a polyethylene microporous film (thickness 12 $\mu$m, porosity 40% and Gurley value 200 sec/100 mL). At that time, coating was performed such that the coating amounts on the front and back surfaces were equal. This was immersed in a coagulation liquid (water : DMAc = 70:30 [mass ratio], liquid temperature: 40°C) to solidify the coating layer, and then, the coating layer was washed with water and dried. In this way, the separator in which the heat-resistant porous layer was formed on both surfaces of the polyethylene microporous film was obtained. The thickness of the heat-resistant porous layer was 4 $\mu$m on one side.

[Examples 202 to 212 and Comparative Examples 201 to 206]

Each separator was manufactured in the same manner as in Example 201 except that the material and composition of the heat-resistant porous layer were set to the specifications shown in Table 3.

The composition, physical properties, and evaluation results of each separator of Examples 202 to 212 and Comparative Examples 201 to 206 are shown in Table 3.

[Table 3]

| | Heat-resistant porous layer | | | | | | | | Area shrinkage ratio (150°C) | Viscosity of coating liquid (immediately after preparation) | Viscosity increase rate of coating liquid (after 24 hours) |
|---|---|---|---|---|---|---|---|---|---|---|---|
| | Resin | First inorganic particle | | Second inorganic particle | | First:Second | Content of inorganic particle | Thickness (one side) | | | |
| | Kind | Kind | Particle size | Kind | Particle size | Mass ratio | | | | | |
| | - | - | μm | - | μm | - | % by mass | μm | % | % | % |
| Comparative Example 201 | VDF-HFP | - | - | Mg(OH)$_2$ | 0.8 | 0:100 | 80 | 4 | 74 | 70 | 180 |
| Example 202 | VDF-HFP | BaSO$_4$ | 0.05 | Mg(OH)$_2$ | 0.8 | 10:90 | 80 | 4 | 47 | 79 | 42 |
| Example 203 | VDF-HFP | BaSO$_4$ | 0.05 | Mg(OH)$_2$ | 0.8 | 40:60 | 80 | 4 | 38 | 86 | 37 |
| Example 204 | VDF-HFP | BaSO$_4$ | 0.05 | Mg(OH)$_2$ | 0.8 | 50:50 | 80 | 4 | 34 | 92 | 33 |
| Example 201 | VDF-HFP | BaSO$_4$ | 0.05 | Mg(OH)$_2$ | 0.8 | 70:30 | 80 | 4 | 31 | 100 | 27 |
| Example 205 | VDF-HFP | BaSO$_4$ | 0.05 | Mg(OH)$_2$ | 0.8 | 80:20 | 80 | 4 | 25 | 113 | 20 |
| Example 206 | VDF-HFP | BaSO$_4$ | 0.05 | Mg(OH)$_2$ | 0.8 | 90:10 | 80 | 4 | 20 | 138 | 11 |
| Comparative Example 202 | VDF-HFP | BaSO$_4$ | 0.05 | - | - | 100:0 | 80 | 4 | 18 | 362 | 9 |
| Comparative Example 203 | VDF-HFP | BaSO$_4$ | 0.01 | Mg(OH)$_2$ | 0.5 | 70:30 | 40 | 2 | 80 | 72 | 21 |
| Example 207 | VDF-HFP | BaSO$_4$ | 0.01 | Mg(OH)$_2$ | 0.5 | 70:30 | 50 | 2 | 42 | 93 | 23 |
| Example 208 | VDF-HFP | BaSO$_4$ | 0.01 | Mg(OH)$_2$ | 0.5 | 70:30 | 60 | 2 | 32 | 96 | 28 |
| Example 209 | VDF-HFP | BaSO$_4$ | 0.01 | Mg(OH)$_2$ | 0.5 | 70:30 | 80 | 2 | 27 | 115 | 33 |

(continued)

| | Heat-resistant porous layer | | | | | | Content of inorganic particle | Thickness (one side) | Area shrinkage ratio (150°C) | Viscosity of coating liquid (immediately after preparation) | Viscosity increase rate of coating liquid (after 24 hours) |
|---|---|---|---|---|---|---|---|---|---|---|---|
| | Resin | First inorganic particle | | Second inorganic particle | | First: Second | | | | | |
| | Kind | Kind | Particle size | Kind | Particle size | Mass ratio | | | | | |
| | - | - | $\mu m$ | - | $\mu m$ | - | % by mass | $\mu m$ | % | % | % |
| Example 210 | VDF-HFP | $BaSO_4$ | 0.01 | $Mg(OH)_2$ | 0.5 | 70:30 | 90 | 2 | 20 | 140 | 36 |
| Comparative Example 204 | VDF-HFP | $BaSO_4$ | 0.01 | $Mg(OH)_2$ | 0.5 | 70:30 | 95 | 2 | 11 | 282 | 44 |
| Comparative Example 205 | VDF-HFP | $Al(OH)_3$ | 0.3 | $Mg(OH)_2$ | 1.5 | 80:20 | 60 | 6 | 38 | 124 | 120 |
| Example 211 | VDF-HFP | $BaSO_4$ | 0.3 | $Mg(OH)_2$ | 1.5 | 80:20 | 60 | 6 | 41 | 102 | 25 |
| Comparative Example 206 | VDF-HFP | $BaSO_4$ | 0.3 | $CaSO_4$ | 1.5 | 60:40 | 60 | 3 | 43 | 339 | 8 |
| Example 212 | VDF-HFP | $BaSO_4$ | 0.3 | $Mg(OH)_2$ | 1.5 | 60:40 | 60 | 3 | 42 | 87 | 32 |

<Manufacturing of Separator of Third embodiment>

[Example 301]

As the material of the heat-resistant porous layer, a copolymer of vinylidene fluoride and hexafluoropropylene (VDF-HFP copolymer), aluminum hydroxide particles, and alumina particles were prepared. Physical properties of the aluminum hydroxide particles and the alumina particles are as shown in Table 4.

The VDF-HFP copolymer was dissolved in dimethylacetamide (DMAc), and the aluminum hydroxide particles and the alumina particles were further dispersed, thereby obtaining a coating liquid 4. In the coating liquid 4, the concentration of the VDF-HFP copolymer was 5% by mass, the mass ratio (VDF-HFP copolymer : inorganic particles) of the VDF-HFP copolymer and the inorganic particles was 25:75, and the mass ratio (aluminum hydroxide particles : alumina particles) of the aluminum hydroxide particles and the alumina particles was 60:40.

The coating liquid 4 was applied to both surfaces of a polyethylene microporous film (thickness 12 μm, porosity 40% and Gurley value 200 sec/100 mL). At that time, coating was performed such that the coating amounts on the front and back surfaces were equal. This was immersed in a coagulation liquid (water : DMAc = 70:30 [mass ratio], liquid temperature: 40°C) to solidify the coating layer, and then, the coating layer was washed with water and dried. In this way, the separator in which the heat-resistant porous layer was formed on both surfaces of the polyethylene microporous film was obtained. The thickness of the heat-resistant porous layer was 5 μm on one side.

[Examples 302 to 315 and Comparative Examples 301 to 306]

Each separator was manufactured in the same manner as in Example 301 except that the material and composition of the heat-resistant porous layer were set to the specifications shown in Table 4.

In Comparative Example 304, the viscosity of the coating liquid for forming the heat-resistant porous layer was too high to perform coating well, and the separator could not be manufactured.

The composition, physical properties, and evaluation results of each separator of Examples 301 to 315 and Comparative Examples 301 to 306 are shown in Table 4.

[Table 4]

| | Heat-resistant porous layer | | | | | | | | Area shrinkage ratio (150°C) | Safety test of secondary battery |
|---|---|---|---|---|---|---|---|---|---|---|
| | Resin | First inorganic particle | | Second inorganic particle | | First: Second | Content of inorganic particle | Thickness (one side) | | |
| | Kind | Kind | Particle size | Kind | Particle size | Mass ratio | | | | |
| - | - | - | μm | - | μm | - | % by mass | μm | % | - |
| Comparative Example 305 | VDF-HFP | MgO | 1.0 | $Al_2O_3$ | 0.05 | 60:40 | 75 | 5 | 45 | D |
| Comparative Example 306 | VDF-HFP | Al$(OH)_3$ | 0.8 | Mg$(OH)_2$ | 0.3 | 60:40 | 75 | 5 | 43 | D |
| Comparative Example 301 | VDF-HFP | Al$(OH)_3$ | 0.8 | - | - | 100:0 | 75 | 5 | 75 | D |
| Example 302 | VDF-HFP | Al$(OH)_3$ | 0.8 | $Al_2O_3$ | 0.05 | 90:10 | 75 | 5 | 48 | B |
| Example 301 | VDF-HFP | Al$(OH)_3$ | 0.8 | $Al_2O_3$ | 0.05 | 60:40 | 75 | 5 | 38 | A |
| Example 303 | VDF-HFP | Al$(OH)_3$ | 0.8 | $Al_2O_3$ | 0.05 | 20:80 | 75 | 5 | 28 | A |
| Example 304 | VDF-HFP | Al$(OH)_3$ | 0.8 | $Al_2O_3$ | 0.05 | 10:90 | 75 | 5 | 24 | B |
| Comparative Example 302 | VDF-HFP | - | - | $Al_2O_3$ | 0.05 | 0:100 | 75 | 5 | 19 | D |
| Comparative Example 303 | VDF-HFP | Al$(OH)_3$ | 0.8 | $Al_2O_3$ | 0.05 | 50:50 | 45 | 4 | 79 | D |
| Example 305 | VDF-HFP | Al$(OH)_3$ | 0.8 | $Al_2O_3$ | 0.05 | 50:50 | 50 | 4 | 54 | C |
| Example 306 | VDF-HFP | Al$(OH)_3$ | 0.8 | $Al_2O_3$ | 0.05 | 50:50 | 60 | 4 | 41 | A |
| Example 307 | VDF-HFP | Al$(OH)_3$ | 0.8 | $Al_2O_3$ | 0.05 | 50:50 | 80 | 4 | 32 | A |

(continued)

| | Heat-resistant porous layer | | | | | | | | Area shrinkage ratio (150°C) | Safety test of secondary battery |
|---|---|---|---|---|---|---|---|---|---|---|
| | Resin | First inorganic particle | | Second inorganic particle | | First: Second | Content of inorganic particle | Thickness (one side) | | |
| | Kind | Kind | Particle size | Kind | Particle size | Mass ratio | | | | |
| - | - | - | $\mu$m | - | $\mu$m | - | % by mass | $\mu$m | % | - |
| Example 308 | VDF-HFP | Al(OH)$_3$ | 0.8 | Al$_2$O$_3$ | 0.05 | 50:50 | 90 | 4 | 20 | B |
| Comparative Example 304 | VDF-HFP | Al(OH)$_3$ | 0.8 | Al$_2$O$_3$ | 0.05 | 50:50 | 95 | 4 | - | - |
| Example 309 | VDF-HFP | Al(OH)$_3$ | 0.5 | Al$_2$O$_3$ | 0.01 | 50:50 | 50 | 2 | 52 | B |
| Example 310 | VDF-HFP | Al(OH)$_3$ | 0.5 | Al$_2$O$_3$ | 0.01 | 50:50 | 60 | 2 | 42 | A |
| Example 311 | VDF-HFP | Al(OH)$_3$ | 0.5 | Al$_2$O$_3$ | 0.01 | 50:50 | 80 | 2 | 29 | A |
| Example 312 | VDF-HFP | Al(OH)$_3$ | 0.5 | Al$_2$O$_3$ | 0.01 | 50:50 | 90 | 2 | 22 | B |
| Example 313 | VDF-HFP | Al(OH)$_3$ | 2.0 | Al$_2$O$_3$ | 0.3 | 25:75 | 60 | 4 | 54 | B |
| Example 314 | VDF-HFP | Al(OH)$_3$ | 2.0 | Al$_2$O$_3$ | 0.3 | 50:50 | 60 | 4 | 48 | A |
| Example 315 | VDF-HFP | Al(OH)$_3$ | 2.0 | Al$_2$O$_3$ | 0.3 | 70:30 | 60 | 4 | 41 | B |

The disclosure of Japanese Patent Application No. 2020-093546 filed on May 28, 2020 is incorporated herein by reference in its entirety. The disclosure of Japanese Patent Application No. 2020-093547 filed on May 28, 2020 is incorporated herein by reference in its entirety. The disclosure of Japanese Patent Application No. 2020-093548 filed on May 28, 2020 is incorporated herein by reference in its entirety. The disclosure of Japanese Patent Application No. 2020-106408 filed on June 18, 2020 is incorporated herein by reference in its entirety.

All documents, patent applications, and technical standards described in this specification are incorporated herein by reference to the same extent as if each individual document, patent application, and technical standards were specifically and individually indicated to be incorporated herein by reference.

**Claims**

1. A separator for a non-aqueous secondary battery, the separator comprising:

    a porous substrate; and
    a heat-resistant porous layer that is provided on one side or on both sides of the porous substrate, and that contains a resin and inorganic particles,
    wherein the resin contains (1) a copolymer having a vinylidene fluoride unit and a hexafluoropropylene unit, a weight average molecular weight of the copolymer being from 100,000 to less than 600,000, or the resin contains (2) a polyvinylidene fluoride type resin and an acrylic type resin, in which a mass ratio between the polyvinylidene fluoride type resin and the acrylic type resin (polyvinylidene fluoride type resin : acrylic type resin) contained in the heat-resistant porous layer is from 90:10 to 50:50,
    wherein a content of the inorganic particles in the heat-resistant porous layer is from 50% by mass to 90% by mass, and
    wherein the inorganic particles contain first inorganic particles having an average primary particle size of from 0.01 $\mu$m to 0.3 $\mu$m and second inorganic particles having a larger average primary particle size than the average primary particle size of the first inorganic particles.

2. A separator for a non-aqueous secondary battery, the separator comprising:

    a porous substrate; and
    a heat-resistant porous layer that is provided on one side or on both sides of the porous substrate, and that contains a resin and inorganic particles,
    wherein a content of the inorganic particles in the heat-resistant porous layer is from 50% by mass to 90% by mass, and
    wherein the inorganic particles contain first inorganic particles that are metal sulfate particles and second inorganic particles that are inorganic particles other than metal sulfate particles.

3. A separator for a non-aqueous secondary battery, the separator comprising:

    a porous substrate; and
    a heat-resistant porous layer that is provided on one side or on both sides of the porous substrate, and that contains a resin and inorganic particles,
    wherein a content of the inorganic particles in the heat-resistant porous layer is from 50% by mass to 90% by mass, and
    wherein the inorganic particles contain first inorganic particles that are metal hydroxide particles and second inorganic particles that are inorganic particles other than metal hydroxide particles.

4. The separator for a non-aqueous secondary battery according to any one of claims 1 to 3, wherein a mass ratio between the first inorganic particles and the second inorganic particles (first inorganic particles: second inorganic particles) is from 90:10 to 10:90.

5. The separator for a non-aqueous secondary battery according to claim 1 or 2, wherein an average primary particle size of the second inorganic particles is from 0.4 $\mu$m to 2.0 $\mu$m.

6. The separator for a non-aqueous secondary battery according to any one of claims 1 to 5, wherein a content of the hexafluoropropylene unit with respect to an entirety of monomer units of the copolymer is from 3.0% by mole to 30% by mole.

7. The separator for a non-aqueous secondary battery according to any one of claims 1 and 4 to 6, wherein the inorganic particles contain metal sulfate particles and metal hydroxide particles.

8. The separator for a non-aqueous secondary battery according to any one of claims 1 and 4 to 7, wherein a thickness of the heat-resistant porous layer is from 1 $\mu$m to 8 $\mu$m per one side of the porous substrate.

9. The separator for a non-aqueous secondary battery according to any one of claims 1 and 4 to 8, wherein a porosity of the heat-resistant porous layer is from 25% to 60%.

10. The separator for a non-aqueous secondary battery according to any one of claims 1, 2 and 4 to 9, wherein a mass ratio between the first inorganic particles and the second inorganic particles (first inorganic particles: second inorganic particles) is from 80:20 to 40:60.

11. The separator for a non-aqueous secondary battery according to any one of claims 1 to 10, wherein a content of the inorganic particles in the heat-resistant porous layer is from 60% by mass to 80% by mass.

12. The separator for a non-aqueous secondary battery according to any one of claims 1, 5 to 9 and 11, wherein a mass ratio between the first inorganic particles and the second inorganic particles (first inorganic particles:second inorganic particles) is from 95:5 to 10:90.

13. The separator for a non-aqueous secondary battery according to any one of claims 1 and 4 to 12, wherein a weight average molecular weight of the polyvinylidene fluoride type resin is from 600,000 to 2,000,000.

14. The separator for a non-aqueous secondary battery according to any one of claims 1, 4 to 9 and 11 to 13, wherein a mass ratio between the first inorganic particles and the second inorganic particles (first inorganic particles: second inorganic particles) is from 90:10 to 50:50.

15. The separator for a non-aqueous secondary battery according to any one of claims 1 and 4 to 14, wherein a mass ratio between the polyvinylidene fluoride type resin and the acrylic type resin (polyvinylidene fluoride type resin: acrylic type resin) contained in the heat-resistant porous layer is from 85:15 to 65:35.

16. The separator for a non-aqueous secondary battery according to any one of claims 2, 4, 5, 10 and 11, wherein an average primary particle size of the first inorganic particles is from 0.01 $\mu$m to 0.3 $\mu$m.

17. The separator for a non-aqueous secondary battery according to any one of claims 2, 4, 5, 10, 11 and 16, wherein the second inorganic particles are metal hydroxide particles.

18. The separator for a non-aqueous secondary battery according to any one of claims 2, 4, 5, 10, 11, 16 and 17, wherein the resin contains a polyvinylidene fluoride type resin that does not have a carboxylic group and an ester bond.

19. The separator for a non-aqueous secondary battery according to any one of claims 3, 4 and 11, wherein an average primary particle size of the first inorganic particles is from 0.4 $\mu$m to 2.0 $\mu$m.

20. The separator for a non-aqueous secondary battery according to any one of claims 3, 4, 11 and 19, wherein an average primary particle size of the second inorganic particles is from 0.01 $\mu$m to 0.3 $\mu$m.

21. The separator for a non-aqueous secondary battery according to any one of claims 3, 4, 11, 19 and 20, wherein the second inorganic particles contain at least one selected from the group consisting of metal oxide particles, metal sulfate particles, metal carbonate particles, metal nitride particles, metal fluoride particles and clay mineral particles.

22. The separator for a non-aqueous secondary battery according to any one of claims 3, 4, 11, 19, 20 and 21, wherein a mass ratio between the first inorganic particles and the second inorganic particles (first inorganic particles: second inorganic particles) is from 60:40 to 15:85.

23. A non-aqueous secondary battery that obtains electromotive force by lithium doping and dedoping, the non-aqueous secondary battery comprising:

   a positive electrode;

a negative electrode; and
the separator for a non-aqueous secondary battery according to any one of claims 1 to 22, the separator being disposed between the positive electrode and the negative electrode.

## INTERNATIONAL SEARCH REPORT

| International application No. |
|---|
| PCT/JP2021/020205 |

**A. CLASSIFICATION OF SUBJECT MATTER**
Int.Cl. H01M50/451(2021.01)i, H01M50/42(2021.01)i, H01M50/426(2021.01)i,
H01M50/434(2021.01)i, H01M50/443(2021.01)i, H01M50/446(2021.01)i,
H01M50/457(2021.01)i, H01M50/46(2021.01)i, H01M50/491(2021.01)i
FI: H01M50/451, H01M50/457, H01M50/446, H01M50/443M, H01M50/434, H01M50/426,
H01M50/42, H01M50/46, H01M50/491

According to International Patent Classification (IPC) or to both national classification and IPC

**B. FIELDS SEARCHED**

Minimum documentation searched (classification system followed by classification symbols)
Int.Cl. H01M50/451, H01M50/42, H01M50/426, H01M50/434, H01M50/443,
H01M50/446, H01M50/457, H01M50/46, H01M50/491

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-133244 A (TEIJIN LTD.) 23 August 2018 (2018-08-23), claims, paragraphs [0060], [0061], [0072], [0118]-[0130] | 3-4, 6, 8-14, 16, 18-23 |
| A | | 1-2, 5, 7, 15, 17 |
| X | JP 2018-133245 A (TEIJIN LTD.) 23 August 2018 (2018-08-23), claims, paragraphs [0129]-[0131], [0142] | 3-4, 6, 8-14, 18-23 |
| A | | 1-2, 5, 7, 15-17 |
| X | JP 2018-527700 A (LG CHEMICAL LTD.) 20 September 2018 (2018-09-20), claims, paragraphs [0067], [0068] | 3-4, 8, 10-12, 14, 16, 18-23 |
| A | | 1-2, 5-7, 9, 13, 15, 17 |
| A | JP 2010-123383 A (TEIJIN LTD.) 03 June 2010 (2010-06-03) | 1-23 |

☒ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 20 July 2021 | 03 August 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP20217020205

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-163872 A (TEIJIN LTD.) 18 October 2018 (2018-10-18) | 1-23 |
| A | WO 2005/029614 A1 (MATSUSHITA ELECTRIC INDUSTRIAL CO., LTD.) 31 March 2005 (2005-03-31) | 1-23 |
| A | WO 2016/157770 A1 (ZEON CORPORATION) 06 October 2016 (2016-10-06) | 1-23 |
| A | WO 2019/146155 A1 (TEIJIN LTD.) 01 August 2019 (2019-08-01) | 1-23 |

Form PCT/ISA/210 (second sheet) (January 2015)

<table>
<tr><td colspan="2" align="center">**INTERNATIONAL SEARCH REPORT**<br>Information on patent family members</td><td>International application No.<br><br>PCT/JP20217020205</td></tr>
<tr><td>JP 2018-133244 A</td><td>23 August 2018</td><td>US 2018/0233726 A1<br>claims, paragraphs [0140]-[0143],<br>[0162], [0163], [0312]-[0325]<br>CN 108448033 A<br>KR 10-2018-0094778 A</td></tr>
<tr><td>JP 2018-133245 A</td><td>23 August 2018</td><td>US 2018/0233726 A1<br>claims, paragraphs<br>[0335]-[0338], [0348]<br>CN 108448033 A<br>KR 10-2018-0094778 A</td></tr>
<tr><td>JP 2018-527700 A</td><td>20 September 2018</td><td>US 2018/0277815 A1<br>claims,<br>paragraphs [0069], [0070]<br>WO 2017/010780 A1<br>EP 3316346 A1<br>KR 10-2017-0007210 A<br>CN 107851762 A</td></tr>
<tr><td>JP 2010-123383 A</td><td>03 June 2010</td><td>(Family: none)</td></tr>
<tr><td>JP 2018-163872 A</td><td>18 October 2018</td><td>US 2018/0254464 A1<br>CN 108539089 A<br>KR 10-2018-0101182 A</td></tr>
<tr><td>WO 2005/029614 A1</td><td>31 March 2005</td><td>US 2006/0194116 A1<br>EP 1667255 A1<br>KR 10-2006-0057621 A<br>CN 1853292 A</td></tr>
<tr><td>WO 2016/157770 A1</td><td>06 October 2016</td><td>CN 107431170 A<br>KR 10-2017-0131404 A</td></tr>
<tr><td>WO 2019/146155 A1</td><td>01 August 2019</td><td>JP 6526359 B1<br>CN 111512471 A</td></tr>
</table>

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017002947 A
- WO 2016098684 A
- WO 2019146155 A
- WO 2008156033 A
- JP 2016033913 A
- JP 2020093546 A
- JP 2020093547 A
- JP 2020093548 A
- JP 2020106408 A